# EUROPÄISCHE PATENTSCHRIFT

(11) **EP 2 572 168 B1**
(45) Veröffentlichungstag und Bekanntmachung des Hinweises auf die Patenterteilung: **19.04.2017**
(21) Anmeldenummer: 11720295.2
(22) Anmeldetag: 02.05.2011
(51) Int. Cl.: G01D 5/347

(54) **AUFSPANNEINRICHTUNG FÜR EINE MASSKÖRPERVORRICHTUNG FÜR EIN POSITIONS-/WEGMESSSYSTEM**
TENSIONING DEVICE FOR MEASURING BODY DEVICE FOR A POSITION/PATH MEASUREMENT SYSTEM
DISPOSITIF DE SERRAGE POUR UN DISPOSITIF À MASSE POUR UN SYSTÈME DE MESURE DE POSITION/DÉPLACEMENT

(30) Priorität: 21.05.2010 DE 202010007285 U
(43) Veröffentlichungstag der Anmeldung: 27.03.2013
(73) Patentinhaber: Balluff GmbH, 73765 Neuhausen (DE)
(72) Erfinder: BEUTLER, Torsten, 73760 Ostfildern (DE); HOLDER, Roland, 73265 Dettingen/Teck (DE)
(74) Vertreter: Hoeger, Stellrecht & Partner Patentanwälte mbB
(86) Internationale Anmeldenummer: PCT/EP2011/056905
(87) Internationale Veröffentlichungsnummer: WO 2011/144436

(56) Entgegenhaltungen:
- DE-A1- 19 802 036
- DE-A1- 19 956 833
- DE-C1- 19 611 983

## Beschreibung

Die Erfindung betrifft eine Maßkörpervorrichtung für ein Positions-/Wegmesssystem, umfassend mindestens ein Fixierungsband zur Fixierung der Maßkörpervorrichtung an einer Anwendung, wobei das mindestens eine Fixierungsband ein erstes Ende und ein zweites Ende aufweist, einen bandförmigen Maßkörper mit mindestens einer Kodierungslage aus Kodierungsmaterial, welche dem mindestens einen Fixierungsband zugeordnet ist, und mindestens eine Verbindungseinrichtung, welche das erste Ende und das zweite Ende des Fixierungsbands relativ zueinander fixiert, wobei die mindestens eine Verbindungseinrichtung ein Brückenelement umfasst, welches relativ zu dem ersten Ende und relativ zu dem zweiten Ende des mindestens einen Fixierungsbands fixiert ist oder fixierbar ist, und wobei an dem Brückenelement mindestens eine Wegspeichereinrichtung angeordnet mit einem ersten Querelement, einem zu dem ersten Querelement beabstandeten zweiten Querelement und einem Stegelement, welches das erste Querelement und das zweite Querelement verbindet und einstückig mit dem ersten Querelement und dem zweiten Querelement verbunden ist, wobei ein Abstand zwischen dem ersten Querelement und dem zweiten Querelement feststellbar einstellbar ist.

Die Erfindung betrifft ferner ein Positions-/Wegmesssystem, umfassend eine Maßkörpervorrichtung.

Weiterhin betrifft die Erfindung eine Anwendung, an welcher ein Positions-/Wegmesssystem positioniert ist.

Magnetisch kodierte Maßkörper und Positions-/Wegmesssysteme, welche solche magnetisch kodierten Maßkörper aufweisen, sind beispielsweise in dem Kapitel "Wegsensoren mit magnetisch kodiertem Maßkörper" in der Veröffentlichung "Lineare Weg- und Abstandssensoren" von Thomas Burkhardt, Albert Feinäugle, Sorin Fericean und Alexander Forkl, Verlag moderne Industrie, München 2004, beschrieben. Entsprechende Messsysteme weisen einen Sensorkopf auf, der Magnetfeldsensoren und vorzugsweise die komplette Elektronik aufnimmt, und einen magnetisch kodierten Maßkörper. Der Maßkörper umfasst sich abwechselnde magnetische Nordpole und Südpole. Die magnetischen Feldlinien des magnetisch kodierten Maßkörpers bilden ein dreidimensionales Vektorfeld. Der Sensorkopf bewegt sich oberhalb des Maßkörpers. Im Sensorkopf befinden sich beispielsweise Magnetfeldsensoren, die entweder die Komponente des Magnetfeldvektors in der Richtung ihrer Empfindlichkeit oder den Winkel des magnetischen Vektorfelds zur Bewegungsrichtung messen. Das Zählen von magnetischen Perioden erlaubt eine Aussage über den zurückgelegten Weg.

In dem nicht vorveröffentlichten deutschen Gebrauchsmuster Nr. 20 2009 003 253.1 vom 27. Februar 2009 und in der nicht vorveröffentlichten US-Patentanmeldung Nr. 12/470,796 vom 22. Mai 2009 ist ein kodierter Maßkörper für ein Positions-/Wegmesssystem beschrieben, welcher ein Trägerband, mindestens eine Kodierungslage aus Kodierungsmaterial, welche auf dem Trägerband angeordnet ist, und ein Abdeckband, welches das Kodierungsmaterial zu einem Außenraum hin abdeckt, wobei das Abdeckband durch das Trägerband gebildet ist, umfasst. Es ist eine Verbindungseinrichtung vorgesehen, welche einen ersten Bereich des Maßkörpers und einen zweiten Bereich des Maßkörpers miteinander verbindet.

In dem nicht vorveröffentlichten deutschen Gebrauchsmuster Nr. 20 2009 017 132.9 vom 11. Dezember 2009 der gleichen Anmelderin ist eine Maßkörpervorrichtung für ein Positions-/Wegmesssystem beschrieben, welches ein Fixierungsband zur Fixierung der Maßkörpervorrichtung an einer Anwendung umfasst, wobei das Fixierungsband ein erstes Ende und ein zweites Ende aufweist, einen bandförmigen Maßkörper mit mindestens einer Kodierungslage aus Kodierungsmaterial aufweist, welcher dem Fixierungsband zugeordnet ist, und mindestens eine Verbindungseinrichtung aufweist, welche das erste Ende und das zweite Ende des Fixierungsbands relativ zueinander fixiert. Das Fixierungsband weist mindestens im Bereich des ersten Endes und des zweiten Endes Ausnehmungen auf. Die mindestens eine Verbindungseinrichtung weist ein erstes Hakenelement zum Einhaken in eine oder mehrere Ausnehmungen am ersten Ende des Fixierungsbands und ein zweites Hakenelement zum Einhaken am zweiten Ende des Fixierungsbands auf. Die mindestens eine Verbindungseinrichtung umfasst eine oder mehrere Verbindungselemente, welches mit dem ersten Hakenelement und dem zweiten Hakenelement verbunden ist und diese relativ zueinander fixiert.

Aus der DE 199 56 833 A1 ist ein Winkelmesssystem mit einem spannbaren Maßband, das eine mittels einer Abtasteinheit abtastbare Messteilung aufweist und das zur Winkelmessung ringartig angeordnet wird, und einer Spannvorrichtung, die mit mindestens einem Ende des Maßbandes verbunden ist und mit der das Maßband zur Festlegung der Position des Endes spannbar ist, bekannt. Es ist ein Übersetzungsmechanismus vorgesehen, über den ein Betätigungselement der Spannvorrichtung mit dem mindestens einen Ende des Maßbands derart gekoppelt ist, dass durch Einwirken auf die Spannvorrichtung mittels des Betätigungselements eine durch die Übersetzung festgelegte Änderung der Position des entsprechenden Endes des Maßbands bewirkt werden kann.

Der Erfindung liegt die Aufgabe zugrunde, eine Maßkörpervorrichtung der eingangs genannten Art bereitzustellen, welche auf einfache Weise aufgebaut ist und mit der sich eine Fixierung an einer Anwendung auf einfache Weise erreichen lässt.

Diese Aufgabe wird bei der Maßkörpervorrichtung der eingangs genannten Art erfindungsgemäß dadurch gelöst, dass der Abstand zwischen dem ersten Querelement und dem zweiten Querelement durch plastische Verformung des Stegelements und/oder des ersten Querelements und/oder des zweiten Querelements feststellbar einstellbar ist.

Die Wegspeichereinrichtung ist über das erste Querelement, das zweite Querelement und das Stegelement als eine Art von Ausstülpung am Brückenelement ausgebildet. Durch plastische Verformung an dieser Ausstülpung lässt sich der Abstand zwischen dem ersten Querelement und dem zweiten Querelement feststellbar verringern. Dadurch kann eine Spannkraft auf das mindestens eine Fixierungsband ausgeübt werden, wenn das Brückenelement an diesen entsprechend fixiert ist. Dadurch wiederum lässt sich die Maßkörpervorrichtung an der Anwendung durch Spannung fixieren.

Eine entsprechende Verbindungseinrichtung lässt sich auf einfache Weise realisieren. Ferner lässt sich die Verspannung an einer Anwendung auf einfache Weise über ein entsprechendes Werkzeug wie eine Zange erreichen.

Die Anzahl der Bauteile, die für die Fixierung der Maßkörpervorrichtung an der Anwendung benötigt werden, lässt sich minimieren. Grundsätzlich lässt sich eine entsprechende Verbindungseinrichtung mit dem Brückenelement und der Wegspeichereinrichtung einstückig ausbilden.

Der Abstand zwischen dem ersten Querelement und dem zweiten Querelement ist durch plastische Verformung des Stegelements und/oder des ersten Querelements und/oder des zweiten Querelements feststellbar einstellbar. Dadurch lässt sich auf einfache Weise eine Wegspeichereinrichtung realisieren und das Brückenelement mit Wegspeichereinrichtung lässt sich beispielsweise einstückig ausbilden.

Günstig ist es, wenn das Brückenelement einen ersten Bereich umfasst, welcher relativ zu dem ersten Ende des mindestens einen Fixierungsbands fixiert oder fixierbar ist und an welchem das erste Querelement einstückig sitzt. Dadurch lässt sich die Verbindungseinrichtung auf einfache Weise realisieren.

Vorteilhafterweise ist das erste Querelement quer zu dem ersten Bereich orientiert. Es ist dabei grundsätzlich möglich, dass das erste Querelement (vor der Verspannung) mindestens näherungsweise senkrecht zu dem ersten Bereich orientiert ist. Vorteilhaft ist es, wenn das erste Querelement in einem spitzen Winkel kleiner 90° zu dem ersten Bereich orientiert ist. Dadurch lässt sich bei der Ausübung einer Druckkraft zum Verspannen auch eine Kraft in Richtung zu der Anwendung hin erreichen, um ein Anliegen an der Anwendung zu bewirken.

Aus dem gleichen Grund ist es günstig, wenn das Brückenelement einen zweiten Bereich umfasst, welcher relativ zu dem zweiten Ende des mindestens einen Fixierungsbands fixiert ist oder fixierbar ist und an welchem einstückig das zweite Querelement sitzt.

Es ist dann entsprechend vorteilhaft, wenn das zweite Querelement quer zu dem zweiten Bereich orientiert ist. Insbesondere ist das zweite Querelement (vor der Verspannung) in einem spitzen Winkel, welcher kleiner 90° ist, zu dem zweiten Bereich orientiert.

Das Stegelement ist vorteilhafterweise quer zu dem ersten Querelement und quer zu dem zweiten Querelement orientiert. Das Stegelement sorgt für die Verbindung zwischen dem ersten Querelement und dem zweiten Querelement. Es lässt sich ferner vorteilhafterweise plastisch verformen, um eine "Wegspeicherung" zu realisieren.

Bei einer Ausführungsform weist das Stegelement mindestens eine Ausnehmung auf. Die mindestens eine Ausnehmung kann durchgehend sein oder beispielsweise als nichtdurchgehende Vertiefung (Mulde) ausgebildet sein. Dadurch lässt sich auf einfache Weise eine plastische Verformung zur Wegverkürzung erreichen.

Ganz besonders vorteilhaft ist es, wenn das erste Querelement und das zweite Querelement Angriffsflächen für ein Werkzeug zur Verkürzung des Abstands zwischen dem ersten Querelement und dem zweiten Querelement haben. Durch Angriff des Werkzeugs, wie beispielsweise einer Zange, lässt sich eine Druckkraft ausüben, durch welche der Abstand zwischen dem ersten Querelement und dem zweiten Querelement feststellbar verkürzt wird. Dadurch lässt sich eine Spannkraft auf entsprechende Endbereiche des Fixierungsbands ausüben und dieses lässt sich dann gespannt an der Anwendung halten. Dadurch wiederum wird die Maßkörpervorrichtung fixiert.

Bei einer vorteilhaften Ausführungsform sind an dem mindestens einen Fixierungsband im Bereich des ersten Endes und/oder des zweiten Endes ein oder mehrere Ausnehmungen angeordnet und/oder es sind ein oder mehrere Haken angeordnet. Dadurch kann auf einfache Weise eine zuvor lose Verbindungseinrichtung relativ zu dem ersten Ende des Fixierungsbands und/oder relativ zu dem zweiten Ende des Fixierungsbands fixiert werden. Wenn entsprechend an der Verbindungseinrichtung ein oder mehrere Haken angeordnet sind bzw. an dem mindestens einen Fixierungsband ein oder mehrere Haken angeordnet sind, dann kann eine Hakenverbindung durch Hakeneingriff in eine Ausnehmung hergestellt werden. Dadurch lässt sich eine für eine Verspannung ausreichende Verbindung herstellen.

Insbesondere sind an dem Brückenelement ein oder mehrere Haken zum Eingriff in ein oder mehrere Ausnehmungen, welche am mindestens einen Fixierungsband positioniert sind, angeordnet und/oder ein oder mehrere Ausnehmungen zum Eingriff von einem oder mehreren Haken des mindestens einen Fixierungsbands sind an dem Brückenelement angeordnet. Es ist dadurch möglich, ein nicht geschlossenes Fixierungsband um die Anwendung zu legen. Durch Eintauchen des oder der Haken an der oder den Ausnehmungen lässt sich das Band schließen. Durch Eingriff an der Wegspeichereinrichtung lässt sich dann das mindestens eine Fixierungsband und damit die Maßkörpervorrichtung an der Anwendung spannen.

Bei einer Ausführungsform ist an dem Brückenelement zu einem Ende des mindestens einen Fixierungsbands hin mindestens ein Haken oder mindestens eine Ausnehmung angeordnet. Dadurch lässt sich ein Einhaken im Bereich eines (einzigen) Endes des mindestens einen Fixierungsbands erreichen.

Das Brückenelement ist dann mit dem mindestens einen Fixierungsband relativ zu einem Ende fest verbunden, beispielsweise durch Verschweißung oder Verschraubung, und zur Fixierung relativ zu dem anderen Ende sind der oder die Haken vorgesehen. Eine entsprechende Fixierung der Maßkörpervorrichtung lässt sich dann auf einfache Weise erreichen. Die Verbindungseinrichtung ist bereits fest bezüglich eines Endes des Fixierungsbands montiert. An dem anderen Ende des Fixierungsbands erfolgt eine Einhakung und anschließend eine Wegverkürzung an der Wegspeichereinrichtung zum Spannen.

Bei einer alternativen Ausführungsform ist an dem Brückenelement zu beiden Enden des mindestens einen Fixierungsbands hin jeweils mindestens ein Haken und/oder mindestens eine Ausnehmung vorgesehen. Dadurch lässt sich die Verbindungseinrichtung an dem Fixierungsband zu beiden Enden hin einhaken.

Bei einem Ausführungsbeispiel ist die mindestens eine Ausnehmung und/oder der mindestens eine Haken, welcher an dem Fixierungsband angeordnet ist, an einem Stegelement (Zungenelement) positioniert, welches mit dem mindestens einen Fixierungsband verbunden ist. Grundsätzlich kann das entsprechende Stegelement mit dem mindestens einen Fixierungsband einstückig gebildet sein. Es ist auch möglich, dass das Stegelement mit dem mindestens einen Fixierungselement nachträglich beispielsweise durch Verschraubung oder Verschweißung verbunden wurde. Ein entsprechendes Fixierungsband lässt sich auf einfache Weise herstellen, nämlich als "ungestörtes" Band. Die entsprechenden Teile der Verbindungseinrichtung (nämlich das oder die Stegelemente und das oder die Brückenelemente) werden dann nachträglich an dem mindestens einen Fixierungsband fixiert; das oder die Brückenelemente werden mit dem Band verbunden und das oder die Stegelemente werden mit dem Band verbunden.

Es ist dabei insbesondere vorgesehen, dass dasjenige Element, welches mit dem oder den Haken versehen ist, so mit dem Band verbunden ist, dass es über das entsprechende Ende des Bandes hinausragt. Dieses Element kann dann ein Bereich des Bandes am anderen Ende überlappen und derjenige Teil mit der oder den Ausnehmungen kann dann auf dem Teil mit dem oder den Haken aufliegen.

Bei einer konstruktiv einfachen Ausführungsform ist ein Haken durch eine Stanzlasche gebildet. Dadurch lässt sich ein Haken auf einfache Weise an einer Verbindungseinrichtung realisieren.

Ganz besonders vorteilhaft ist es, wenn im Bereich einer Hakenverbindung ein Element mit der mindestens einen Ausnehmung auf einem Element mit dem mindestens einen Haken liegt und ein Haken von unten in eine zugeordnete Ausnehmung eingreift. Dadurch kann eine gute Anlage des Fixierungsbands außerhalb der Verbindungseinrichtung und der Verbindungseinrichtung an der Anwendung erreicht werden. Dies verbessert die Fixierung. Beispielsweise ist das Element mit dem oder den Haken das Brückenelement und ein Stegelement, welches an dem Fixierungsband angeordnet ist, liegt dann auf dem Brückenelement auf. Es ist auch möglich, dass beispielsweise ein Stegelement, welches an dem mindestens einen Fixierungsband angeordnet ist, mit einem oder mehreren Haken versehen ist und dann das Element, welches aufliegt, ein Teil des Brückenelements ist.

Vorteilhafterweise liegt bei an der Anwendung fixiertem mindestens einen Fixierungsband ein Haken an einer Stirnseite der zugeordneten Ausnehmung an, welcher der Wegspeichereinrichtung zugewandt ist. Dadurch lässt sich bei Wegverkürzungen der Wegspeichereinrichtung vermittelt über den oder die Haken das Fixierungsband in Richtung der Wegspeichereinrichtung ziehen und dadurch anspannen.

Günstig ist es, wenn die mindestens eine Ausnehmung an dem mindestens einen Fixierungsband durchgehend ist. Dadurch lässt sich auf einfache Weise ein Haken einhaken und durch die Ausnehmung durchgreifen. Ein Haken kann dann auch teilweise an einer Oberseite eines Bereichs anliegen, an welchem eine Ausnehmung gebildet ist. Dadurch wird eine axiale Sicherung gegenüber Aushaken erreicht.

Günstig ist es, wenn eine Mehrzahl von Ausnehmungen vorgesehen ist, dass diese gleichmäßig beabstandet sind. Dadurch lässt sich eine sichere Hakenfixierung erreichen.

Insbesondere entspricht ein Abstand von benachbarten Ausnehmungen in Längsrichtung des mindestens einen Fixierungsbands einer Kodierungsperiode oder einem ganzzahligen Vielfachen davon. Dadurch lässt sich auf einfache Weise eine 360°-Überfahrbarkeit der Maßkörpervorrichtung durch einen Sensorkopf erreichen.

Günstig ist es, wenn eine erste Reihe an Ausnehmungen und eine zweite Reihe an Ausnehmungen vorgesehen sind, wobei der Maßkörper zwischen der ersten Reihe und der zweiten Reihe positioniert ist. Dadurch ist gewissermaßen ein Kanal zwischen der ersten Reihe und der zweiten Reihe vorgegeben, in welchem die Maßkörpervorrichtung und ein Sensorkopf relativ zueinander beweglich sind. Dadurch lässt sich eine 360°-Überfahrbarkeit der Maßkörpervorrichtung erreichen.

Bei einer Ausführungsform sind an dem mindestens einen Fixierungsband einstückig Laschen zur Positionierung und/oder Fixierung des Maßkörpers gebildet. Dadurch lässt sich dieser auf einfache sichere Weise bezüglich des Fixierungsbands sichern.

Fertigungstechnisch günstig ist es, wenn Laschen durch Stanzen hergestellt sind.

Beispielsweise sind Laschen an Ausnehmungen angeordnet und mindestens teilweise aus Material, welches an der Ausnehmung herausgenommen ist. Dadurch lässt sich in einem Fertigungsschritt sowohl eine Ausnehmung zum Einhaken als auch eine Lasche herstellen.

Ganz besonders vorteilhaft ist es, wenn das mindestens eine Fixierungsband ein Metallband ist. Dieses lässt sich auf einfache Weise bearbeiten. Beispielsweise lassen sich auf einfache Weise durch Stanzen oder dergleichen Ausnehmungen herstellen. Ferner lässt sich das Metallband auf einfache Weise biegeflexibel ausbilden.

Wenn das mindestens eine Fixierungsband biegeflexibel ist, kann es auf einfache Weise an eine Oberflächengestalt einer Anwendung angepasst werden. Beispielsweise lässt es sich um kreisrunde Anwendungen anlegen bzw. es lässt sich eine Anpassung an Krümmungen der Anwendung erreichen.

Ganz besonders vorteilhaft ist es, wenn der Maßkörper ein erstes Ende aufweist und ein zweites Ende aufweist, wobei bei relativer Fixierung des ersten Endes und des zweiten Endes des mindestens einen Fixierungsbands der Maßkörper sich über sein erstes Ende und sein zweites Ende ohne Kodierungsmodifikation fortsetzt. Dadurch ist die Kodierung im Bereich des Übergangs zwischen dem ersten Ende und dem zweiten Ende minimal beeinflusst und der Maßkörper lässt sich über einen Sensorkopf auch im Bereich der Enden des Maßkörpers überfahren. Dadurch lässt sich beispielsweise ein Messbereich größer 360° realisieren.

Bei einer vorteilhaften Ausführungsform sind an dem Brückenelement und/oder dem mindestens einen Fixierungsband mindestens zwei Haken angeordnet. Dadurch lässt sich bei entsprechendem Eingriff in zugeordnete Ausnehmungen eine sichere Fixierung erreichen.

Es ist dann günstig, wenn die Haken hintereinander bezogen auf eine Verbindungsrichtung des ersten Endes und des zweiten Endes des mindestens einen Fixierungsbands angeordnet sind. Dadurch lässt sich eine sichere Verbindung zwischen der Verbindungseinrichtung und dem Fixierungsband im Bereich des entsprechenden Endes erreichen.

Bei einer Ausführungsform ist eine erste Verbindungseinrichtung vorgesehen, welche einer ersten Reihe aus Ausnehmungen zugeordnet ist, und es ist eine zweite Verbindungseinrichtung vorgesehen, welche einer zweiten Reihe an Ausnehmungen zugeordnet ist. Es lassen sich dadurch die Verbindungseinrichtungen in einer Querrichtung beabstandet zueinander positionieren, wobei eine sichere Fixierung des Fixierungsbands an der Anwendung erreicht ist. Zwischen der ersten Verbindungseinrichtung und der zweiten Verbindungseinrichtung ist eine Art von Kanal gebildet, durch den ein Sensorkopf durchführbar ist.

Günstig ist es, wenn das Brückenelement auf einer Oberseite des mindestens einen Fixierungsbands aufliegend mit diesem verbunden ist. Dadurch lässt sich eine stabile und sichere Verbindung zwischen den Brückenelementen und mindestens einem Fixierungsband erreichen.

Bei einer Ausführungsform weist der Maßkörper ein Abdeckband auf, welches die mindestens eine Kodierungslage abdeckt. Diese ist dadurch geschützt.

Es kann dabei vorgesehen sein, dass das Abdeckband dem mindestens einen Fixierungsband zugewandt ist oder zu dem mindestens einen Fixierungsband abgewandt ist.

Bei einer vorteilhaften Ausführungsform ist der Maßkörper magnetisch kodiert und umfasst als Kodierungsmaterial ein magnetisches Material. Durch eine Abfolge von Nord- und Südpolen lässt sich auf einfache Weise eine entsprechende Kodierung erreichen.

Es ist grundsätzlich auch möglich, dass der Maßkörper optisch oder kapazitiv kodiert ist.

Insbesondere ist das Fixierungsband geschlossen ausgebildet, wenn das erste Ende und das zweite Ende des mindestens einen Fixierungsbands relativ zueinander fixiert sind. Die geschlossene Ausbildung wird dabei über die mindestens eine Verbindungseinrichtung erreicht, welche gewissermaßen eine Fortsetzung des Fixierungsbands zum Schließen des Fixierungsbands ist.

Es ist dabei grundsätzlich möglich, dass der Maßkörper an dem mindestens einen Fixierungsband fixiert ist, d.h. der Maßkörper ist mit dem Fixierungsband beispielsweise adhäsiv, durch Formschluss oder durch Reibschluss verbunden. Es ist auch möglich, dass der Maßkörper nicht fest an dem Fixierungsband gehalten ist, sondern dass das Fixierungsband durch entsprechende Kraftausübung auf den Maßkörper diesen mit der Anwendung verspannt.

Erfindungsgemäß wird ein Positions-/Wegmesssystem bereitgestellt, welches eine erfindungsgemäße Maßkörpervorrichtung umfasst und eine Sensoreinrichtung, welche mindestens einen für die Kodierung sensitiven Sensor aufweist.

Die relative Position des Sensors zu dem Maßkörper lässt sich ermitteln.

Es ist dabei vorteilhaft, wenn ein erster Sensor und ein zweiter Sensor vorgesehen ist. Dadurch kann beispielsweise ein Bereich von größer 360° erfasst werden.

Es ist dann beispielsweise vorteilhaft, wenn der erste Sensor und der zweite Sensor zueinander gegenüberliegend sind und insbesondere radial bzw. diametral gegenüberliegenden sind.

Insbesondere ist der mindestens eine Sensor magnetfeldsensitiv und der kodierte Maßkörper ist magnetisch kodiert.

Erfindungsgemäß lässt sich eine Anwendung bereitstellen, an welcher ein erfindungsgemäßes Positions-/Wegmesssystem montiert ist, wobei die Anwendung ein drehbares oder schwenkbares Element wie eine Welle umfasst, an welchem das mindestens eine Fixierungsband fixiert ist.

Es ergeben sich dabei die im Zusammenhang mit der erfindungsgemäßen Maßkörpervorrichtung und der erfindungsgemäßen Positions-/Wegmesssystem erläuterten Vorteile.

Insbesondere umgibt das Fixierungsband das drehbare oder schwenkbare Element. Das Fixierungsband lässt sich auch an gekrümmte Oberflächen anpassen.

Vorteilhafterweise ist das Fixierungsband über die mindestens eine Verbindungseinrichtung an einem drehbaren oder schwenkbaren Element verspannt gehalten. Eine zusätzliche Fixierung ist dann nicht mehr notwendig. Die nachfolgende Beschreibung bevorzugter Ausführungsformen dienen im Zusammenhang mit den Zeichnungen der näheren Erläuterung der Erfindung.

Es zeigen:
- Figur 1: eine schematische Darstellung eines Ausführungsbeispiels einer Anwendung, an welcher eine Ausführungsform eines erfindungsgemäßen Positions-/Wegmesssystems fixiert ist;
- Figur 2: eine vergrößerte Darstellung eines Ausschnitts des Positions-/Wegmesssystems gemäß Figur 1 mit Sensor in einer Schnittdarstellung in einer ersten Variante;
- Figur 3: die gleiche Ansicht wie bei Figur 2 bei einer zweiten Variante;
- Figur 4: eine vergrößerte Ansicht in der Richtung A gemäß Figur 1;
- Figur 5: eine perspektivische Darstellung des Bereichs, welcher in den Figur 2 und 4 dargestellt ist;
- Figur 6: eine ähnliche Ansicht wie Figur 2, wobei ein Werkzeug an eine Wegspeichereinrichtung angreift;
- Figur 7(a), (b), (c): verschiedene Ausführungsformen von Maßkörpern, welche an einem Fixierungsband fixiert sind;
- Figur 8: eine Schnittansicht eines Ausführungsbeispiels eines Fixierungsbands mit fixiertem Maßkörper;
- Figur 9: eine Schnittansicht eines weiteren Ausführungsbeispiels eines Fixierungsbands;
- Figur 10: eine Schnittansicht eines weiteren Ausführungsbeispiels eines Fixierungsbands;
- Figur 11: eine ähnliche Ansicht wie Figur 5 bei einer Variante eines Ausführungsbeispiels ohne Sensorkopf; und
- Figur 12: eine ähnliche Ansicht wie in Figur 11 bei einer weiteren Variante einer Ausführungsform.

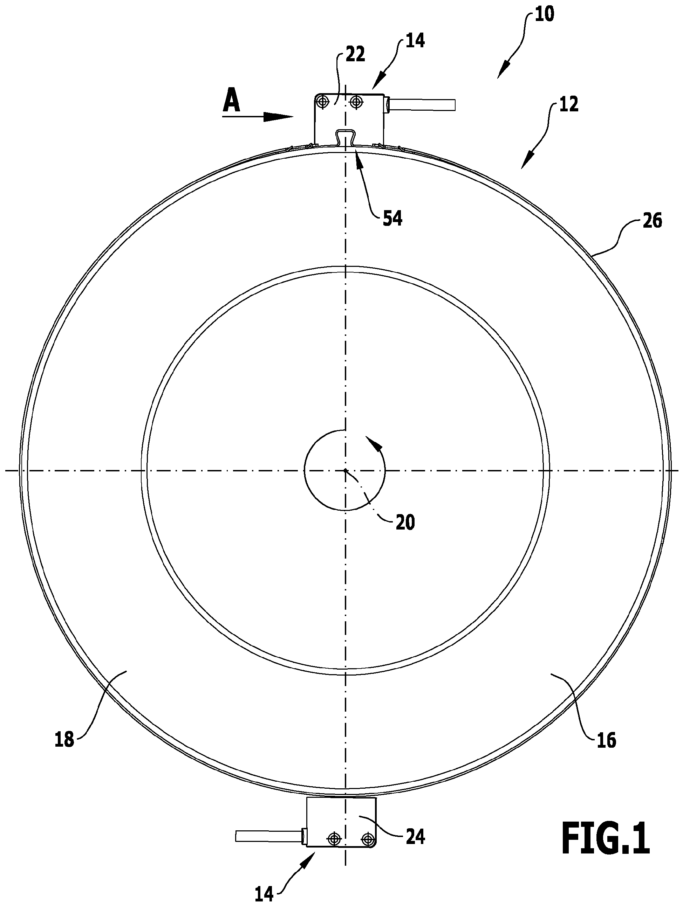

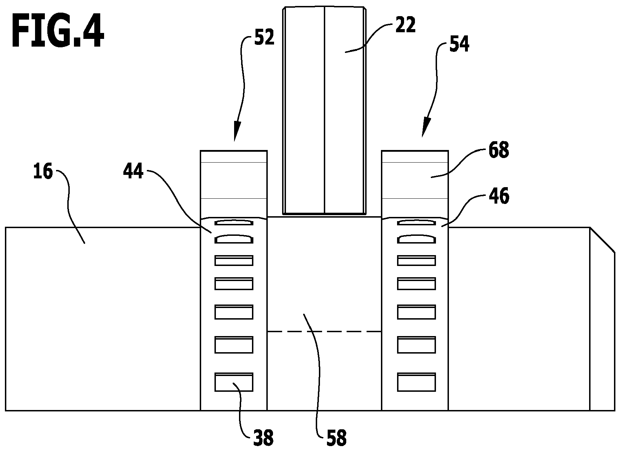

Ein Ausführungsbeispiel eines erfindungsgemäßen Positions-/Wegmesssystems, welches in Figur 1 gezeigt und dort mit 10 bezeichnet ist und in Teildarstellungen in den Figuren 1 bis 6 gezeigt ist, umfasst eine Maßkörpervorrichtung 12 und eine Sensoreinrichtung 14. Die Maßkörpervorrichtung 12 ist kodiert mit mindestens einer Kodierungslage und die Sensoreinrichtung 14 umfasst mindestens einen Sensor, welcher sensitiv für diese Kodierung ist.

Bei einem Ausführungsbeispiel, welches in Figur 1 gezeigt ist, ist die Maßkörpervorrichtung 12 drehfest an einer Anwendung 16 fixiert. Die Anwendung 16 ist beispielsweise eine Welle 18. Diese ist um eine Drehachse 20 drehbar. Die Maßkörpervorrichtung 12 sitzt an einem Außenmantel dieser Welle 18.

Die Sensoreinrichtung 14 umfasst einen ersten Sensor 22 und einen zweiten Sensor 24. Diese sind diametral gegenüberliegend positioniert. Sie liegen insbesondere ausgerichtet auf einer Linie, welche durch die Drehachse 20 geht. Der erste Sensor 22 und der zweite Sensor 24 sind beispielsweise ortsfest positioniert und die Welle 18 kann sich bezüglich dieser Sensoren 22 und 24 drehen.

Durch das Positions-/Wegmesssystem 10 kann die Drehposition der Welle 18 ermittelt werden.

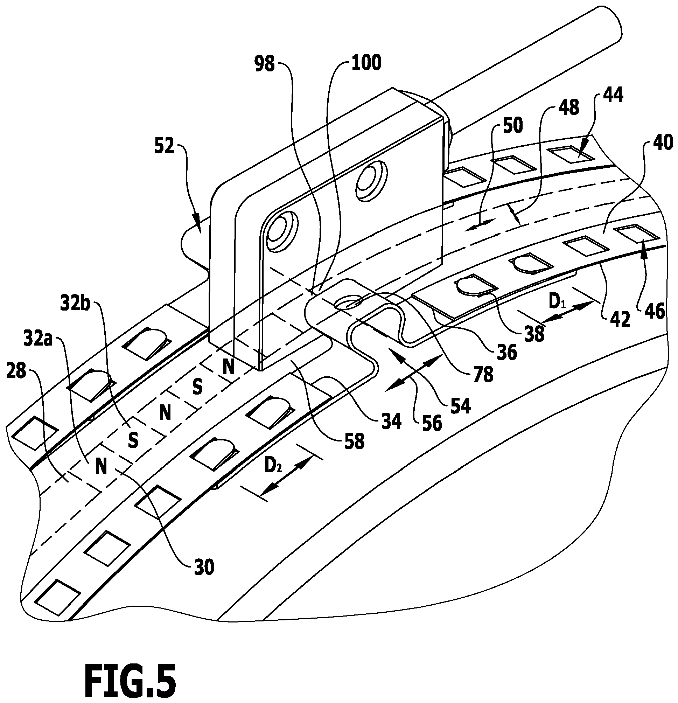

Die Maßkörpervorrichtung 12 umfasst ein Fixierungsband 26. Dieses Fixierungsband 26 ist biegeflexibel und insbesondere biegeelastisch oder plastisch ausgebildet. Es ist typischerweise aus einem metallischen Material hergestellt. An dem Fixierungsband 26 ist ein Maßkörper 28 (Figur 5) angeordnet. Dieser umfasst mindestens eine Kodierungslage 30 aus einem kodierten Material.

Bei einem Ausführungsbeispiel ist die mindestens eine Kodierungslage 30 aus magnetischem (magnetisierbarem) Material hergestellt. Sie umfasst magnetische Polfelder 32a, 32b (Nordpolfelder und Südpolfelder), welche alternierend aufeinander folgen. Die Größe und/oder Abfolge der Polfelder bestimmt die Kodierung. Die Kodierung wiederum bestimmt die Feldbeaufschlagung der Sensoreinrichtung 14, welche den mindestens einen magnetfeldsensitiven Sensor 22, 24 aufweist und enthält dadurch die Ortsabhängigkeit.

Die Position der Sensoreinrichtung 14 relativ zu dem Maßkörper 28 kann ermittelt werden, indem das entsprechende Signal der Sensoreinrichtung 14 ausgewertet wird.

Die magnetischen Feldlinien der magnetischen Polfelder 32a, 32b bilden ein dreidimensionales Vektorfeld. Die Sensoreinrichtung 14 ist in diesem Vektorfeld positioniert. Beispielsweise bewegt sich die Welle 18 mit der Maßkörpervorrichtung 12 relativ zu der Sensoreinrichtung 14 und dadurch bewegt sich das Vektorfeld relativ zu der Sensoreinrichtung 14. Durch Zählen von magnetischen Perioden, welche über die Sensoreinrichtung 14 detektiert werden, erhält man eine Aussage über den zurückgelegten Weg und damit die Drehposition, wobei grundsätzlich eine Richtungsabhängigkeit bei entsprechender Ausrichtung der Sensoreinrichtung 14 detektierbar ist. Absolute Positionen lassen sich beispielsweise mittels Durchführung einer Referenzfahrt bestimmen.

Es ist auch möglich, dass das Positions-/Wegmesssystem 10 als absolut messendes System ohne vorige Referenzfahrt realisiert ist. Dazu umfasst die mindestens eine Kodierungslage 30 neben mindestens einer inkrementalen Spur eine absolute Spur, welche durch entsprechende Sensoren der Sensoreinrichtung 14 abtastbar ist.

Positions-/Wegmesssysteme mit magnetisch kodiertem Maßkörper sind beispielsweise in dem Kapitel "Wegsensoren mit magnetisch kodiertem Maßkörper" in der Veröffentlichung "Lineare Weg- und Abstandssensoren" von Thomas Burkhardt, Albert Feinäugle, Sorin Fericean, Alexander Forkl, Verlag moderne Industrie, München 2004, beschrieben. Auf diese Veröffentlichung wird ausdrücklich Bezug genommen und sie wird zu einem Teil dieses Dokuments durch Bezugnahme gemacht.

Die Kodierung des Maßkörpers 28 kann auch beispielsweise kapazitiv oder optisch sein, wobei die Sensoreinrichtung 14 dann entsprechend ausgebildet ist.

Für eine Inkrementalspur weist die Kodierungslage 30 eine Periode D₂ auf.

Das Fixierungsband 26 weist ein erstes Ende 34 und ein zweites Ende 36 auf.

Mindestens im Bereich des zweiten Endes 36 hat das Fixierungsband 26 durchgehende Ausnehmungen 38, welche sich zwischen einer Oberseite 40 und einer Unterseite 42 des Fixierungsbands 26 erstrecken. Diese Ausnehmungen 38 sind beispielsweise durch Ausstanzung hergestellt. Benachbarte Ausnehmungen 38 weisen einen Abstand D₁ auf.

Der Abstand D₁ ist bevorzugterweise gleich groß wie die Periode D₂.

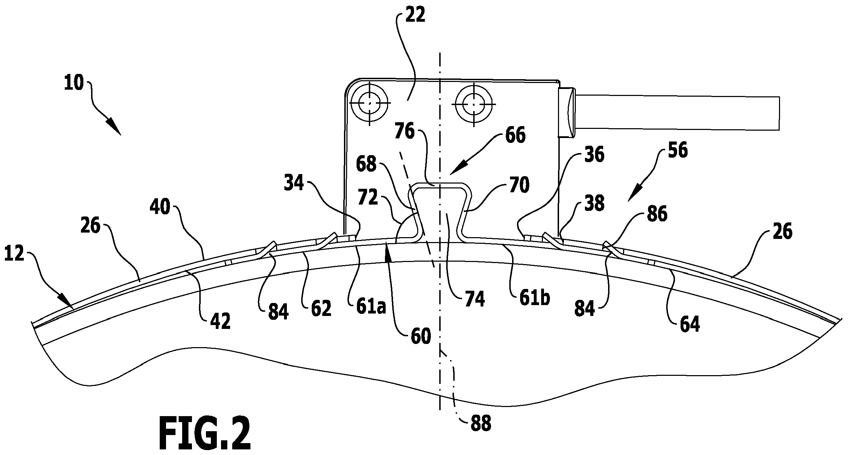

Bei einer Ausführungsform, welche in den Figur 2, 4 und 5 gezeigt ist, sind Ausnehmungen 38 sowohl im Bereich des ersten Endes 34 als auch des zweiten Endes 36 des Fixierungsbands 28 angeordnet.

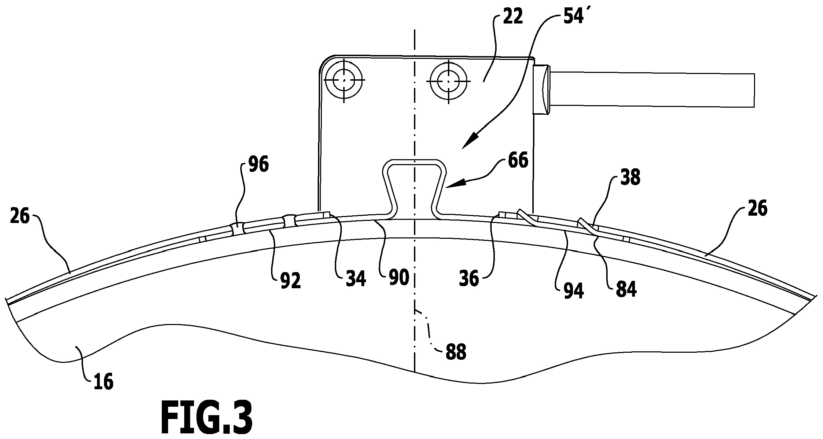

Bei einer Ausführungsform, welche in Figur 3 gezeigt ist, sind Ausnehmungen 38 nur im Bereich des zweiten Endes 36 des Fixierungsbands 26 angeordnet. Bei einer weiteren Ausführungsform sind Ausnehmungen 38 über die gesamte Länge des Fixierungsbands 26 von dem ersten Ende 34 zu dem zweiten Ende 36 vorhanden sind.

Bei einer Ausführungsform ist an dem Fixierungsband 26 mindestens im Bereich des zweiten Endes 36 eine erste Reihe 44 an Ausnehmungen 38 und eine zweite Reihe 46 an Ausnehmungen 38 angeordnet. Die erste Reihe 44 und die zweite Reihe 46 sind parallel beabstandet zueinander ausgerichtet. Bevorzugterweise liegen dabei Ausnehmung 38 der ersten Reihe 44 und der zweiten Reihe 36 in einer Querrichtung 48 zu einer Längsrichtung 50 des Fixierungsbands 26 fluchtend zueinander.

Der Maßkörper 28 ist zwischen der ersten Reihe 44 und der zweiten Reihe 46 angeordnet.

Grundsätzlich kann ein Fixierungsband auf unterschiedliche Art und Weise ausgestaltet sein. Beispielsweise sind die Ausnehmungen 38 mindestens im Bereich des zweiten Endes 36 des Fixierungsbands 26 aus dem Fixierungsband selber ausgestanzt. Das Fixierungsband 26 weist dann über seine gesamte Länge eine einheitliche Breite auf. Es ist insbesondere einstückig ausgebildet.

Es ist auch möglich, dass das Fixierungsband im Bereich der entsprechenden Ausnehmungen Fahnen aufweist, an welchen die Ausnehmungen 38 gebildet sind und diese Fahnen sind an dem restlichen Fixierungsband einstückig gebildet oder an diesem fixiert.

Grundsätzlich ist es auch möglich, dass beispielsweise in der Querrichtung 48 beabstandete mehrere Fixierungsbänder zur Fixierung des Maßkörpers 28 vorgesehen sind.

Der Maßkörper 28 ist an der Oberseite 40 oder der Unterseite 42 des Fixierungsbands 26 positioniert.

Das erste Ende 34 und das zweite Ende 36 des Fixierungsbands 26 sind über eine erste Verbindungseinrichtung 52 und eine zweite Verbindungseinrichtung 54 relativ zueinander fixiert mit einer Verbindungsrichtung 56, welche parallel zur Längsrichtung 50 liegt. Die erste Verbindungseinrichtung 52 ist dabei an Ausnehmungen 38 der ersten Reihe 44 angeordnet und die zweite Verbindungseinrichtung 54 ist an Ausnehmungen 38 der zweiten Reihe 46 angeordnet. Die erste Verbindungseinrichtung 52 und die zweite Verbindungseinrichtung 54 sind in der Querrichtung 48 parallel zueinander beabstandet. Zwischen der ersten Verbindungseinrichtung 52 und der zweiten Verbindungseinrichtung 54 ist ein "Kanal" 58 gebildet, in welchen die Sensoreinrichtung 14 mit beispielsweise dem ersten Sensor 22 positionierbar ist. Auch bei Verbindung der Enden 34 und 36 des Fixierungsbands 26 wird dadurch die Beweglichkeit der Maßkörpervorrichtung 12 relativ zu der Sensoreinrichtung 14 nicht beeinflusst und der Höhenabstand des ersten Sensors 22 beziehungsweise des zweiten Sensors 24 kann in jeder relativen Drehposition der Maßkörpervorrichtung 12 zu dem ersten Sensor 22 und dem zweiten Sensor 24 gleichgehalten werden.

Die erste Verbindungseinrichtung 52 und die zweite Verbindungseinrichtung 54 umfassen jeweils ein Brückenelement 60 mit einem ersten Bereich 62 und einem zweiten Bereich 64. Der erste Bereich 62 ist relativ zu dem ersten Ende 34 des Fixierungsbands 26 fixiert. Der zweite Bereich 64 ist relativ zu dem zweiten Ende 36 des Fixierungsbands 26 fixiert, wenn die Maßkörpervorrichtung 12 an der Anwendung 16 gespannt gehalten ist.

Der erste Bereich 62 und der zweite Bereich 64 sind jeweils bandförmig ausgebildet und insbesondere aus einem metallischen Material hergestellt. Wenn die Maßkörpervorrichtung 12 gespannt an der Anwendung 16 gehalten ist, dann liegen der erste Bereich 62 und der zweite Bereich 64 bevorzugterweise an einem Oberflächenbereich 61a, 61b der Anwendung 16 an.

An dem Brückenelement 60 ist eine Wegspeichereinrichtung 66 angeordnet. Diese umfasst ein erstes Querelement 68, welches einstückig mit dem ersten Bereich 62 des Brückenelements 60 verbunden ist. Ferner umfasst sie ein zweites Querelement 70, welches einstückig mit dem zweiten Bereich 64 des Brückenelements 60 verbunden ist. Das erste Querelement 68 und das zweite Querelement 70 sind dabei quer zu dem entsprechenden ersten Bereich 62 bzw. zweiten Bereich 64 orientiert.

Bei einer Ausführungsform liegen das erste Querelement 68 und das zweite Querelement 70 in einem Winkel 72 zu dem entsprechenden ersten Bereich 62 bzw. zweiten 64, wobei dieser Winkel bevorzugterweise im Bereich zwischen 60° und 90° liegt. Bei einer besonders günstigen Ausführungsform ist dieser Winkel 72 ein spitzer Winkel, welcher kleiner ist als 90°.

Der spitze Winkel 72 ist dabei so, dass das entsprechende Querelement, beispielsweise das erste Querelement 68 ausgehend von der Verbindungsstelle zu dem entsprechenden ersten Bereich 62, nach oben verläuft und dabei in Richtung zu dem ersten Bereich 62 hinverläuft. Entsprechend läuft das zweite Querelement 70 von dem zweiten Bereich 64 nach oben und dabei in Richtung des zweiten Bereichs 64. Ein Abstand zwischen dem ersten Querelement und dem zweiten Querelement 70 wird dann nach unten, zu den Bereichen 62, 64 hin, kleiner.

Das erste Querelement 68 und das zweite Querelement 70 sind beabstandet zueinander, wobei zwischen diesen ein Freiraum 74 gebildet ist.

Das erste Querelement 68 und das zweite Querelement 70 sind durch ein Stegelement 76 miteinander verbunden. Dieses Stegelement 76 ist einstückig mit dem ersten Querelement 68 und einstückig mit dem zweiten Querelement 70 verbunden. Das Stegelement 76 selber ist quer zu dem ersten Querelement 68 und dem zweiten Querelement 70 orientiert. Es ist insbesondere mindestens näherungsweise parallel zu dem ersten Bereich 62 und dem zweiten Bereich 64 orientiert. Es schließt den Freiraum 74 nach oben ab. Durch das erste Querelement 68, das zweite Querelement 70 und das Stegelement 76 ist eine Art von Ausstülpung an dem Brückenelement 60 gebildet. Das Stegelement 76 kann eine oder mehrere Ausnehmungen 78 (Figur 5) aufweisen, wobei eine Ausnehmung 78 insbesondere durch eine durchgehende Öffnung gebildet ist.

Über die Wegspeichereinrichtung 66 lässt sich der Abstand zwischen dem ersten Bereich 62 und dem zweiten Bereich 64 über Einstellung des Abstandes zwischen dem ersten Querelement 68 und dem zweiten Querelement 70 feststellbar einstellen. Durch plastische Verformung der Wegspeichereinrichtung 66 wird der entsprechende Abstand feststellbar eingestellt. Die Feststellung erfolgt dabei durch plastische Verformung der Wegspeichereinrichtung 66 und insbesondere durch plastische Verformung an dem Stegelement 76 und/oder dem ersten Querelement 68 und/oder dem zweiten Querelement 70. Eine oder mehrere Ausnehmungen 78 an dem Stegelement 76 erleichtern die Verformbarkeit.

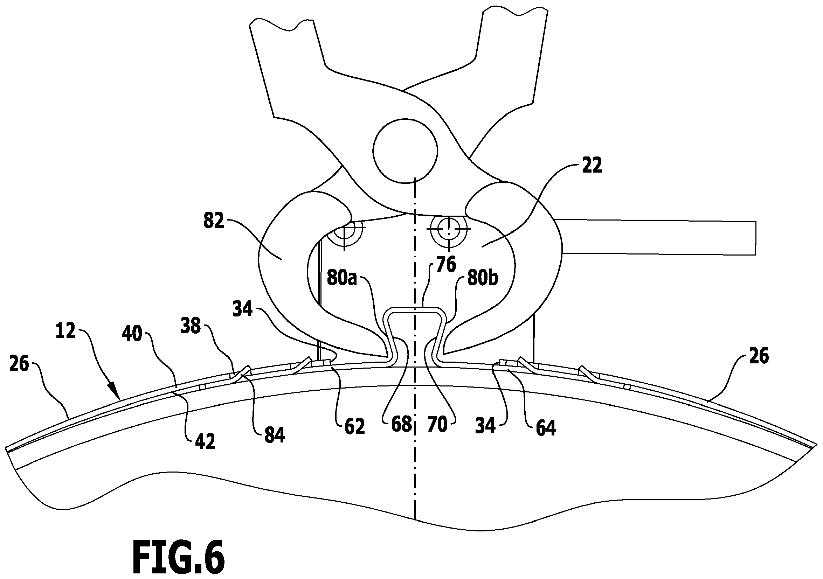

Jeweilige Außenflächen 80a, 80b des ersten Querelements 68 und des zweiten Querelements 70 (Figur 6) bilden Angriffsflächen für ein Werkzeug 82 wie beispielsweise eine Zange. Durch Druckausübung lässt sich der Abstand zwischen dem ersten Querelement 68 und dem zweiten Querelement 70 und dadurch der Abstand zwischen dem ersten Bereich 62 und dem zweiten Bereich 64 feststellbar verringern. Dadurch wiederum lässt sich, wenn das Brückenelement 60 relativ zu dem Fixierungsband 26 fixiert ist, dieses gespannt an der Anwendung 16 fixieren.

Wenn das erste Querelement 68 und das zweite Querelement 70 in einem spitzen Winkel kleiner 90° zu dem jeweiligen ersten Bereich 62 bzw. zweiten Bereich 64 orientiert sind, dann lässt sich auch bei einer Werkzeugeinwirkung sicherstellen, dass das Brückenelement 60 an Oberflächenbereiche 61a, 61b der Anwendung 16 gedrückt wird.

Bei einer Ausführungsform, welche in Figur 2 gezeigt ist, weist das Brückenelement 60 sowohl am ersten Bereich 62 als auch am zweiten Bereich 64 jeweils Haken 84 auf. Beispielsweise sind dabei jeweils eine Mehrzahl von hintereinander angeordneten Haken jeweils an dem ersten Bereich 62 als auch an dem zweiten Bereich 64 vorgesehen. Die Haken 84 weisen dabei nach oben. Sie sind beispielsweise durch eine Ausstanzung an dem Brückenelement 60 gebildet. Ein Abstand benachbarter Haken 84 jeweils in dem ersten Bereich 62 und dem zweiten Bereich 64 entspricht dem Abstand D₂ von Ausnehmungen 38 des Fixierungsbands 26.

Die Haken 84 tauchen, wenn die Maßkörpervorrichtung 12 an der Anwendung 16 fixiert ist, in den entsprechenden Ausnehmungen 38 des Fixierungsbands 26 ein.

Bei der Ausführungsform gemäß Figur 2 tauchen Haken 84 an dem ersten Bereich 62 in Ausnehmungen 38 im Bereich des ersten Endes 34 des Fixierungsbands 26 ein. Die Haken 84 im zweiten Bereich 64 tauchen in Ausnehmungen 38 im Bereich des zweiten Endes 36 des Fixierungsbands 26 ein. Die Verbindungseinrichtung 56 lässt sich dadurch sowohl im Bereich des ersten Endes 34 des Fixierungsbands 26 als auch im Bereich des zweiten Endes 36 des Fixierungsbands 26 durch Einhaken fixieren.

Das Brückenelement 60 mit dem ersten Bereich 62 und dem zweiten Bereich 64 liegt an den Oberflächenbereichen 61a, 61b der Anwendung 16 an. Das Fixierungsband 26 liegt dabei mit dem Bereich am ersten Ende 34 auf dem ersten Bereich 62 des Brückenelements 60 und mit dem Bereich an dem zweiten Ende 36 auf dem zweiten Bereich 64 auf, wobei die Haken 84 in den entsprechenden Ausnehmungen 38 eingehakt sind.

Die Ausnehmungen 38 weisen jeweils eine Stirnseite 86 auf, welche der Wegspeichereinrichtung 66 zugewandt ist. Die Haken 84 liegen jeweils an der Stirnseite 86 der Ausnehmungen 38 an.

Zur Fixierung der Maßkörpervorrichtung 12 werden die entsprechenden Verbindungseinrichtungen 52, 54 über das jeweilige Brückenelement 60 an den Ausnehmungen 38 im Bereich des ersten Endes 34 des Fixierungsbands und im Bereich des zweiten Endes des Fixierungsbands 36 eingehakt. Die Verbindungseinrichtungen 52, 54 sind dabei mit ihrer Länge entsprechend dimensioniert.

Durch Druckausübung auf das erste Querelement 68 und das zweite Querelement 70 insbesondere über ein Werkzeug 82 lässt sich deren Abstand verringern. Dadurch wird der erste Bereich 62 in Richtung einer Mittellinie 88 der Wegspeichereinrichtung 66 gezogen. Ferner wird der zweite Bereich 64 in Richtung dieser Mittellinie 88 gezogen und dabei das Fixierungsband 26 an dem jeweiligen ersten Ende 34 und zweiten Ende 36 mitgezogen und dadurch gespannt gehalten.

Bei einer weiteren Ausführungsform, welche in Figur 3 gezeigt ist, sind Verbindungseinrichtungen 52', 54' vorgesehen, welche grundsätzlich gleich ausgebildet sind wie die erste Verbindungseinrichtung 52 und die zweite Verbindungseinrichtung 54 mit dem Unterschied, dass ein Einhaken nur im Bereich des zweiten Endes 36 des Fixierungsbands 26 vorgesehen ist.

Es ist dazu ein Brückenelement 90 vorhanden, welches eine Wegspeichereinrichtung entsprechend der Wegspeichereinrichtung 66 aufweist (für gleiche Elemente werden gleiche Bezugszeichen verwendet). Dieses Brückenelement 90 hat wiederum einen ersten Bereich 92 und einen zweiten Bereich 94. Der zweite Bereich 94 ist grundsätzlich gleich ausgebildet wie der zweite Bereich 64, welcher oben beschrieben wurde.

Über den ersten Bereich 92 ist das Brückenelement 90 fest mit dem Fixierungsband im Bereich des ersten Endes 34 verbunden. Beispielsweise ist der erste Bereich 92 mit dem Fixierungsband 26 verschweißt oder über Schraubelemente 96 (Figur 3) fest verbunden. Die entsprechenden Verbindungseinrichtungen 52', 54' sind dann fest an dem Fixierungsband 26 montiert.

Der zweite Bereich 94 weist Haken 84 auf, welche in Ausnehmungen 38 im Bereich des zweiten Endes 36 des Fixierungsbands 26 eintauchen können.

Zur Fixierung wird das Fixierungsband 26 im Bereich des zweiten Endes 36 auf dem zweiten Bereich 94 des Brückenelements 90 aufgelegt und dabei werden die Haken 84 in die entsprechenden Ausnehmungen 38 im Bereich des zweiten Endes 36 des Fixierungsbands 26 eingehakt.

Durch Druckausübung auf die Wegspeichereinrichtung 66 wird der Abstand zwischen dem ersten Bereich 92 und dem zweiten Bereich 94 verringert und dabei wird der Abstand zwischen dem ersten Ende 34 und dem zweiten Ende 36 des Fixierungsbands 26 verringert und dieses wird dadurch gespannt an der Anwendung 16 gehalten.

Bei der Ausführungsform gemäß Figur 2 sind Haken 84 sowohl am ersten Bereich 62 als auch am zweiten Bereich 64 vorgesehen.

Bei der Ausführungsform gemäß Figur 3 sind Haken nur am zweiten Bereich 94, d.h. für den Bereich am zweiten Ende 36 des Fixierungsbands 26 vorgesehen.

Es ist dabei grundsätzlich möglich, dass ein Bereich 62, 64 bzw. 94 einen Haken aufweist oder mehr als zwei Haken aufweist.

Es ist grundsätzlich möglich, dass die erste Verbindungseinrichtung 52 bzw. 52' und die zweite Verbindungseinrichtung 54 bzw. 54' gleich ausgebildet sind.

Es ist auch möglich, dass eine der Verbindungseinrichtungen wie oben beschrieben ausgebildet ist und die andere Verbindungseinrichtung so ausgebildet ist, wie in dem nicht vorveröffentlichten deutschen Gebrauchsmuster Nr. 20 2009 017 132.9 der gleichen Anmelderin beschrieben, wobei Hakenelemente mit Haken vorgesehen sind, zwischen welche eine Schraube angeordnet ist und durch Anziehen der Schraube lässt sich der Abstand zwischen den Hakenelementen verringern.

Der Maßkörper 28 weist ein erstes Ende 98 auf, welches dem ersten Ende 34 des Fixierungsbands 26 zugeordnet ist (Figur 5). Er weist ferner ein zweites Ende 100 auf, welches dem zweiten Ende 36 des Fixierungsbands 26 zugeordnet ist. Es ist dabei vorgesehen, dass der Maßkörper 28 an seinem ersten Ende 98 und seinem zweiten Ende 100 jeweils mit einem vollständigen Kodierungsfeld wie beispielsweise einem vollständigen magnetischen Polfeld endet.

Die Kodierung setzt sich über das erste Ende 98 und das zweite Ende 100 des Maßkörpers 28 vollständig fort. Der Maßkörper 28 ist dadurch nicht modifiziert und nur minimal gestört. Dadurch lässt sich der Bereich am ersten Ende 98 und am zweiten Ende 100 mittels der Sensoreinrichtung 14 ohne Unterbrechung der Kodierung überfahren. Es lassen sich beispielsweise auch Drehwinkel größer als 360° erfassen. Der Maßkörper 28 ist über den gesamten Bereich von 360° nutzbar.

Unter Umständen ist die Linearität im Beriech zwischen dem ersten Ende 98 und dem zweiten Ende 100 gestört, wobei diese Störung minimal ist.

Die Maßkörpervorrichtung 12 ist über die Verbindungseinrichtung 52, 54 bzw. 52', 54' gespannt an der Anwendung 16 gehalten, wobei sich die Spannung durch Einwirkung auf die Wegspeichereinrichtung 66 erzeugen lässt.

Beispielsweise lässt sich ein kreisrunder Maßkörper dann bei entsprechender Fixierung und Ausbildung überfahren.

Wenn ein erster Sensor 22 und ein zweiter Sensor 24 verwendet werden, lässt sich der gesamte Winkelbereich von 360° messen und auch der Bereich, in dem das Ende 98 und das Ende 100 des Maßkörpers 28 aneinanderstoßen, lässt sich überbrücken.

Bei einer konkreten Ausführungsform ist das Fixierungsband 26 aus einem Blechmaterial hergestellt, welches beispielsweise eine Dicke im Bereich zwischen 0,2 mm und 0,4 mm aufweist. Beispielhaft weist das Fixierungsband 26 eine Breite in der Querrichtung 28 von ca. 25 mm auf.

Ein typischer Wert für den Abstand D₁ ist 1 cm.

Wenn der Maßkörper 28 an der Unterseite 52 des Fixierungsbands 26 fixiert ist, ist er gegen Umwelteinflüsse gut geschützt. Grundsätzlich besteht aber auch die Möglichkeit, den Maßkörper 28 an der Oberseite 40 zu positionieren.

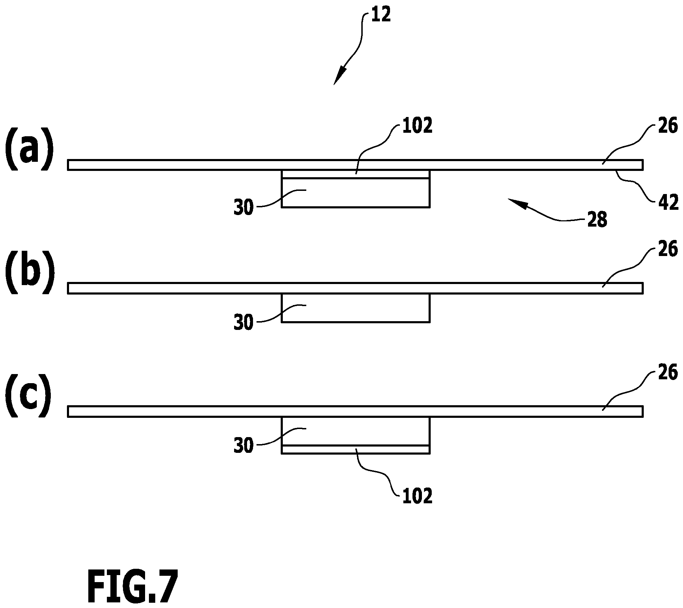

Bei einer Ausführungsform (Figur 7(a)) umfasst der Maßkörper 28 eine Kodierungslage 30 aus einem Bandmaterial. An dieser Kodierungslage 30 ist ein Abdeckband 102 angeordnet. Das Abdeckband 102 ist der Unterseite 42 des Fixierungsbands 26 zugewandt und der Maßkörper 28 ist über das Abdeckband 102 mit dem Fixierungsband 26 beispielsweise adhäsiv verbunden.

Ein kodierter Maßkörper, bei dem ein Abdeckband auch ein Trägerband für Kodierungsmaterial bildet, ist in der nicht vorveröffentlichten deutschen Gebrauchsmusteranmeldung Nr. 20 2009 003 253.1 vom 27. Februar 2009 sowie in der nicht vorveröffentlichten US-Patentanmeldung Nr. 12/470,796 vom 22. Mai 2009 beschrieben.

Es ist auch grundsätzlich möglich, wie in Figur 7(b) gezeigt, dass die Kodierungslage 30 direkt an dem Fixierungsband 26 angeordnet ist.

Bei einer weiteren Ausführungsform ist die Kodierungslage 30 an dem Fixierungsband 26 angeordnet und ein Abdeckband 102 sitzt auf der Kodierungslage 30 dem Fixierungsband 26 abgewandt (Figur 7(c)).

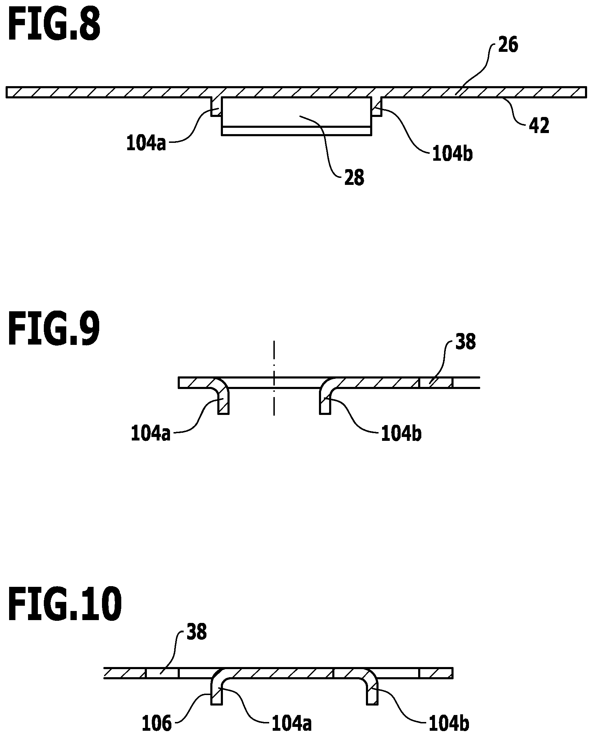

Es kann vorgesehen sein, wie in Figur 8 schematisch gezeigt, dass an dem Fixierungsband beabstandete Laschen 104a, 104b angeordnet sind. Die Laschen 104a, 104b sind insbesondere einstückig an dem Fixierungsband 26 gebildet und beispielsweise durch Stanzung hergestellt.

Ein Abstand zwischen den Laschen 104a, 104b entspricht der Breite des Maßkörpers 28. Der Maßkörper 28 ist zwischen den Laschen 104a, 104b positioniert und insbesondere fixiert. Die Laschen 104a, 104b weisen dabei eine Höhe auf, mit welcher sie über die Unterseite 42 bzw. Oberseite 40 des Fixierungsbands 26 hinausragen, wobei diese Höhe kleiner ist als die entsprechende Höhe des Maßkörpers 28.

Es ist grundsätzlich möglich, wie in Figur 9 schematisch gezeigt, dass die Laschen 104a, 104b beispielsweise durch Stanzen von Ausnehmungen an dem Fixierungsband 26 hergestellt sind, wobei diese Ausnehmungen unabhängig von den Ausnehmungen 38 sind.

Es ist auch möglich, wie in Figur 10 schematisch gezeigt, dass Ausnehmungen 38 und Laschen 104a, 104b benachbart zueinander sind. Wenn eine Ausnehmung 38 hergestellt wird, dann erfolgt nur eine Teilausstanzung und eine entsprechende Zunge 106 wird abgebogen, um eine Lasche 104a bzw. 104b zu bilden.

Bei einer Ausführungsform ist der Maßkörper 28 nicht direkt an dem Fixierungsband 26 fixiert, sondern der Maßkörper 28 wird an einer Anwendung beispielsweise durch Aufkleben fixiert. Das Fixierungsband 26 wird dann über den Maßkörper 28 gelegt und wie oben beschrieben erfolgt eine Verspannung über die Verbindungseinrichtungen 52, 54. Dadurch erfolgt auch eine (lösbare) Fixierung des Maßkörpers 28 an dem Fixierungsband 26, wobei das Fixierungsband 26 (nach Lösung der Fixierung) von dem Maßkörper 28 abnehmbar ist. Der Maßkörper ist gewissermaßen lose gegenüber dem Fixierungsband 26 fixiert. Das Fixierungsband 26 bildet dann ein Schutzband für den Maßkörper 28.

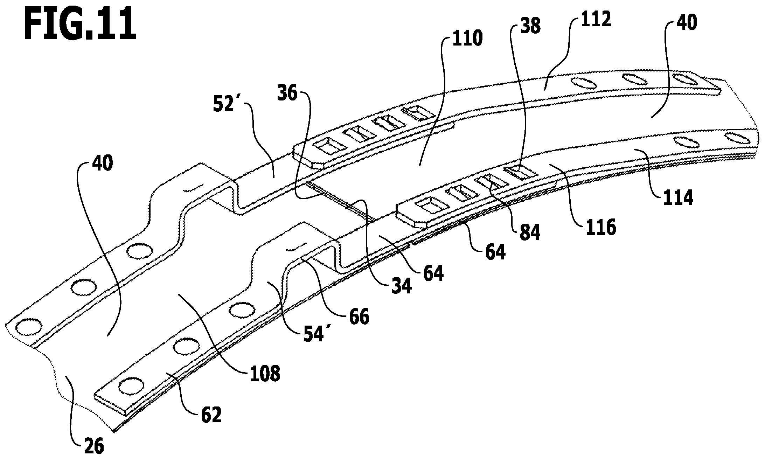

Bei einer Ausführungsform, welche in einer perspektivischen Teildarstellung in Figur 11 ohne Sensorkopf gezeigt ist, ist ein Fixierungsband 26 mit erstem Ende 34 und zweitem Ende 36 vorgesehen. Wenn der zugeordnete Maßkörper an der Anwendung 16 fixiert ist, dann liegen diese Enden 34, 36 mit geringem Abstand gegenüber oder stoßen aneinander an.

In einem Bereich 108 des Fixierungsbands 26, an welchem das erste Ende 34 gebildet ist, sind Verbindungseinrichtungen 52', 54' fixiert. Mit dem entsprechenden ersten Bereich 62 sind die Verbindungseinrichtungen 52', 54' mit dem Bereich 108 des Fixierungsbands 26 beispielsweise durch Verschrauben oder Verschweißen fixiert. Der entsprechende erste Bereich 62 liegt dabei vorzugsweise auf der Oberseite 40 auf.

Die entsprechende Wegspeichereinrichtung 66 der Verbindungseinrichtungen 52', 54' liegt beabstandet zu dem ersten Ende 34 des Fixierungsbands 26. Die Wegspeichereinrichtung 66 liegt dadurch im Bereich 108 des Fixierungsbands 26.

Die zweiten Bereiche 64 der Verbindungseinrichtungen 52', 54' erstrecken sich über das erste Ende 34 hinaus in einen Bereich 110 des Fixierungsbands 26, an welchem das zweite Ende 36 gebildet ist.

An dem zweiten Bereich 64 sind, wie oben beschrieben, Haken 84 angeordnet.

An dem Bereich 110 des Fixierungsbands 26 sind Stegelemente 112, 114 fixiert. Es ist dabei ein erstes Stegelement 112 der Verbindungseinrichtung 52' zugeordnet und ein zweites Stegelement 114 ist der zweiten Verbindungseinrichtung 54' zugeordnet.

Die Stegelemente 112, 114 sind beispielsweise durch Verschrauben oder Verschweißen an der Fixierungseinrichtung in dem Bereich 110 fixiert. Sie liegen dabei in einem Fixierungsbereich an der Oberseite 40 des Bereichs 110 auf. Die jeweiligen Stegelemente 112, 114 weisen einen vorderen Bereich 116 auf. In diesem vorderen Bereich 116 sind Ausnehmungen entsprechend den Ausnehmungen 38 gebildet. In diese Ausnehmungen 38 können die Haken 84 einhaken.

Der vordere Bereich 116 ist bei fixiertem Maßkörper beabstandet zu der Oberseite 40 des Fixierungsbands 26 im Bereich 110. Zwischen dem vorderen Bereich 116 der Stegelemente 112, 114 und der Oberseite 40 liegt ein Teil des zweiten Bereichs 64 der zugeordneten Verbindungseinrichtung 52' bzw. 54'. Dieser Teil des zweiten Bereichs 64 liegt dadurch an der Oberseite 40 im Bereich 110 des Fixierungsbands 26 auf. Der entsprechende vordere Bereich 116 des Stegelements 112 bzw. 114 liegt auf dem zugeordneten zweiten Bereich 64 auf.

Ansonsten funktioniert die entsprechende Maßkörpervorrichtung wie oben beschrieben.

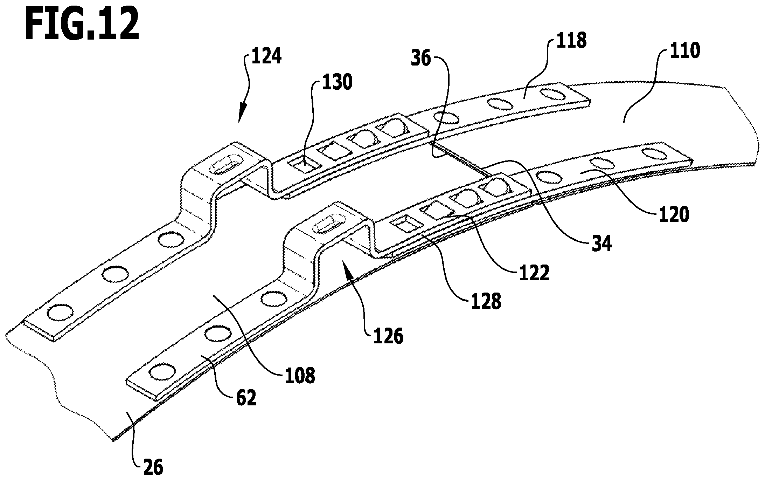

Bei einer weiteren Ausführungsform, welche in Figur 12 schematisch gezeigt ist, ist wieder ein Fixierungsband 26 mit einem Bereich 108 vorgesehen, an welchem das erste Ende 34 gebildet ist. Ferner ist ein Bereich 110 vorgesehen, an welchem das zweite Ende 36 gebildet ist.

An dem Bereich 110 sind Stegelemente 118, 120 fixiert. Beispielsweise sind diese mit dem Fixierungsband 26 in dem Bereich 110 verschraubt oder verschweißt.

Das erste Stegelement 118 und das zweite Stegelement 120 sind beabstandet mit einem zwischenliegenden Kanal für einen Sensorkopf. Sie ragen über das zweite Ende 36 des Fixierungsbands hinaus in Richtung des Bereichs 108.

An den Stegelementen 108, 120 sind Haken 122 gebildet. Diese Haken sind insbesondere einstückig ausgebildet. Ein Bereich der Stegelemente 118, 120, welcher über das zweite Ende 36 hinausragt, ist dabei mit den Haken 122 versehen.

Wenn die entsprechende Maßkörpervorrichtung fixiert ist, liegen die Stegelemente 118, 120 mit dem Bereich, an welchem die Haken 122 gebildet sind, auf dem Bereich 108 des Fixierungsbands 26 auf.

An dem Bereich 108 sind eine erste Verbindungseinrichtung 124 und eine zweite Verbindungseinrichtung 126 fixiert. Die Verbindungseinrichtungen sind dabei in ihrem ersten Bereich 62 und in der Wegspeichereinrichtung 66 grundsätzlich gleich ausgebildet wie oben beschrieben und es werden gleiche Bezugszeichen verwendet.

In einem zweiten Bereich 128 der Verbindungseinrichtungen 124 und 126 sind Ausnehmungen 130 gebildet. Der entsprechende zweite Bereich 128 liegt dabei oberhalb des Bereichs 108 des Fixierungsbands 26. Die Ausnehmungen 130 dienen zum Einhaken der Haken 122 der jeweiligen Stegelemente 118, 120. Wenn die entsprechende Maßkörpervorrichtung fixiert ist, liegen die Stegelemente 118, 120 mit ihrem jeweiligen Hakenbereich auf der Oberseite 40 des Bereichs 108 des Fixierungsbands 26 auf. Die jeweiligen zweiten Bereiche 128 der ersten Verbindungseinrichtung 124 und der zweiten Verbindungseinrichtung 126 liegen auf diesen Hakenbereichen auf, wobei die Haken 122 in Eingriff stehen mit den zugeordneten Ausnehmungen 130.

Ansonsten funktioniert die entsprechende Maßkörpervorrichtung wie oben beschrieben.

### Bezugszeichenliste

- 10: Positions-/Wegmesssystem
- 12: Maßköpervorrichtung
- 14: Sensoreinrichtung
- 16: Anwendung
- 18: Welle
- 20: Drehachse
- 22: Erster Sensor
- 24: Zweiter Sensor
- 26: Fixierungsband
- 28: Maßkörper
- 30: Kodierungslage
- 32a: Magnetische Polfelder
- 32b: Magnetische Polfelder
- 34: Erstes Ende
- 36: Zweites Ende
- 38: Ausnehmung
- 40: Oberseite
- 42: Unterseite
- 44: Erste Reihe
- 46: Zweite Reihe
- 48: Querrichtung
- 50: Längsrichtung
- 52: Erste Verbindungseinrichtung
- 52': Erste Verbindungseinrichtung
- 54,: Zweite Verbindungseinrichtung
- 54': Zweite Verbindungseinrichtung
- 56: Verbindungsrichtung
- 58: Kanal
- 60: Brückenelement
- 61a: Oberflächenbereich
- 61b: Oberflächenbereich
- 62: Erster Bereich
- 64: Zweiter Bereich
- 66: Wegspeichereinrichtung
- 68: Erstes Querelement
- 70: Zweites Querelement
- 72: Winkel
- 74: Freiraum
- 76: Stegelement
- 78: Ausnehmung
- 80a: Außenfläche
- 80b: Außenfläche
- 82: Werkzeug
- 84: Haken
- 86: Stirnseite
- 88: Mittellinie
- 90: Brückenelement
- 92: Erster Bereich
- 94: Zweiter Bereich
- 96: Schraubelement
- 98: Erstes Ende des Maßkörpers
- 100: Zweites Ende des Maßkörpers
- 102: Abdeckband
- 104a: Lasche
- 104b: Lasche
- 106: Zunge
- 108: Bereich
- 110: Bereich
- 112: Erstes Stegelement
- 114: Zweites Stegelement
- 116: Vorderer Bereich
- 118: Erstes Stegelement
- 120: Zweites Stegelement
- 122: Haken
- 124: Erste Verbindungseinrichtung
- 126: Zweite Verbindungseinrichtung
- 128: Zweiter Bereich
- 130: Ausnehmung

## Patentansprüche

1. Maßkörpervorrichtung für ein Positions-/Wegmesssystem, umfassend mindestens ein Fixierungsband (26) zur Fixierung der Maßkörpervorrichtung an einer Anwendung (16), wobei das mindestens eine Fixierungsband (26) ein erstes Ende (34) und ein zweites Ende (36) aufweist, einen bandförmigen Maßkörper (28) mit mindestens einer Kodierungslage (30) aus Kodierungsmaterial, welche dem mindestens einen Fixierungsband (26) zugeordnet ist, und mindestens eine Verbindungseinrichtung (52, 54; 52', 54'; 124, 126), welche das erste Ende (34) und das zweite Ende (36) des Fixierungsbands (26) relativ zueinander fixiert, wobei die mindestens eine Verbindungseinrichtung (52, 54; 52', 54'; 124, 126) ein Brückenelement (60; 90) umfasst, welches relativ zu dem ersten Ende (34) und relativ zu dem zweiten Ende (36) des mindestens einen Fixierungsbands (26) fixiert ist oder fixierbar ist, und wobei an dem Brückenelement (60; 90) mindestens eine Wegspeichereinrichtung (66) angeordnet mit einem ersten Querelement (68), einem zu dem ersten Querelement (68) beabstandeten zweiten Querelement (70) und einem Stegelement (76), welches das erste Querelement (68) und das zweite Querelement (70) verbindet und einstückig mit dem ersten Querelement (68) und dem zweiten Querelement (70) verbunden ist, wobei ein Abstand zwischen dem ersten Querelement (68) und dem zweiten Querelement (70) feststellbar einstellbar ist, **dadurch gekennzeichnet, dass** der Abstand zwischen dem ersten Querelement (68) und dem zweiten Querelement (70) durch plastische Verformung des Stegelements (76) und/oder des ersten Querelements (68) und/oder des zweiten Querelements (70) feststellbar einstellbar ist.

2. Maßkörpervorrichtung nach Anspruch 1, **dadurch gekennzeichnet, dass** das Brückenelement (60; 90) einen ersten Bereich (62; 92) umfasst, welcher relativ zu dem ersten Ende (34) des mindestens einen Fixierungsbands (26) fixiert oder fixierbar ist und an welchem das erste Querelement (68) einstückig sitzt, und insbesondere, dass das erste Querelement (68) quer zu dem ersten Bereich (62; 92) orientiert ist.

3. Maßkörpervorrichtung nach einem der vorangehenden Ansprüche, **dadurch gekennzeichnet, dass** das Brückenelement (60; 90) einen zweiten Bereich (64; 94; 128) umfasst, welcher relativ zu dem zweiten Ende (34) des mindestens einen Fixierungsbands (26) fixiert ist oder fixierbar ist und an welchem einstückig das zweite Querelement (70) sitzt, und insbesondere, dass das zweite Querelement (70) quer zu dem zweiten Bereich (64; 94; 128) orientiert ist.

4. Maßkörpervorrichtung nach einem der vorangehenden Ansprüche, **dadurch gekennzeichnet, dass** das Stegelement (76) quer zu dem ersten Querelement (68) und quer zum dem zweiten Querelement (70) orientiert ist und/oder dass das Stegelement (76) mindestens eine Ausnehmung (78) aufweist.

5. Maßkörpervorrichtung nach einem der vorangehenden Ansprüche, **dadurch gekennzeichnet, dass** das erste Querelement (68) und das zweite Querelement (70) Angriffsflächen (80a; 80b) für ein Werkzeug (82) zur Verkürzung des Abstands zwischen dem ersten Querelement (68) und dem zweiten Querelement (70) haben.

6. Maßkörpervorrichtung nach einem der vorangehenden Ansprüche, **dadurch gekennzeichnet, dass** an dem mindestens einen Fixierungsband (26) im Bereich des ersten Endes (34) und/oder des zweiten Endes (36) eine oder mehrere Ausnehmungen (38) oder ein oder mehrere Haken (122) angeordnet sind, und insbesondere, dass an dem Brückenelement (60; 90) ein oder mehrere Haken (84) zum Eingreifen in eine oder mehrere Ausnehmungen (38), welche am mindestens einen Fixierungsband (26) positioniert sind, angeordnet sind, und/oder ein oder mehrere Ausnehmungen (130) zum Eingriff von einem oder mehreren Haken (122), welche am mindestens einen Fixierungsband (26) positioniert sind, angeordnet sind, und insbesondere, dass das Brückenelement (90) mit dem mindestens einen Fixierungsband (26) relativ zu einem Ende (32) fest verbunden ist und zur Fixierung relativ zu dem anderen Ende (34) der oder die Haken (84) vorgesehen sind.

7. Maßkörpervorrichtung nach Anspruch 1-5, **dadurch gekennzeichnet, dass** an dem mindestens einen Fixierungsband (26) im Bereich des ersten Endes (34) und/oder des zweiten Endes (36) eine oder mehrere Ausnehmungen (38) oder ein oder mehrere Haken (122) angeordnet sind, und insbesondere dass an dem Brückenelement (60; 90) ein oder mehrere Haken (84) zum Eingreifen in eine oder mehrere Ausnehmungen (38), welche am mindestens einen Fixierungsband (26) positioniert sind, angeordnet sind und/oder ein oder mehrere Ausnehmungen (130) zum Eingriff von einem oder mehreren Haken (122), welche am mindestens einen Fixierungsband (26) positioniert sind, angeordnet sind und insbesondere, dass an dem Brückenelement (60) zu beiden Enden (32, 34) des mindestens einen Fixierungsbands (26) hin jeweils mindestens ein Haken (84) und/oder mindestens eine Ausnehmung (130) vorgesehen ist.

8. Maßkörpervorrichtung nach Anspruch 6 oder 7, **dadurch gekennzeichnet, dass** die mindestens eine Ausnehmung (130) und/oder der mindestens eine Haken (84), welcher oder welche an dem mindestens einen Fixierungsband (26) angeordnet ist, an einem Stegelement (112; 114; 118; 120) positioniert ist, welches mit dem mindestens einen Fixierungsband (26) verbunden ist, und insbesondere, dass ein Haken (84) durch eine Stanzlasche gebildet ist, und insbesondere, dass im Bereich einer Hakenverbindung ein Element (112, 114; 118, 120) mit der mindestens einen Ausnehmung (38; 130) auf einem Element (64; 128) mit dem mindestens einen Haken (84; 122) liegt und ein Haken (84; 122) von unten in eine zugeordnete Ausnehmung (38; 130) eingreift, und insbesondere, dass bei an der Anwendung (16) fixiertem mindestens einem Fixierungsband (26) ein Haken (84) an eine Stirnseite (86) der zugeordneten Ausnehmung (38) anliegt, welche der Wegspeichereinrichtung (66) zugewandt ist, und insbesondere, dass die mindestens eine Ausnehmung (38) am mindestens einen Fixierband (26) durchgehend ist, und insbesondere, dass eine Mehrzahl von Ausnehmungen (38) vorgesehen ist, welche gleichmäßig beabstandet sind, und insbesondere, dass ein Abstand (D₁) von benachbarten Ausnehmungen (38) in Längsrichtung (50) des mindestens einen Fixierungsbands (26) gleich ist wie eine Kodierungsperiode (D₂) oder ein ganzzahliges Vielfaches davon, und insbesondere, **gekennzeichnet durch** eine erste Reihe (44) an Ausnehmungen (38) und eine zweite Reihe (46) an Ausnehmungen (38), wobei der Maßkörper (28) zwischen der ersten Reihe (44) und der zweiten Reihe (46) positioniert ist.

9. Maßkörpervorrichtung nach einem der vorangehenden Ansprüche, **dadurch gekennzeichnet, dass** an dem mindestens einen Fixierungsband (26) einstückig Laschen (104a, 104b) zur Positionierung und/oder Fixierung des Maßkörpers (28) gebildet sind, und insbesondere, dass Laschen (104a, 104b) durch Stanzen hergestellt sind, und insbesondere, dass Laschen (104a, 104b) an Ausnehmungen (38) angeordnet sind und mindestens teilweise aus Material sind, welches an der Ausnehmung (38) herausgenommen ist.

10. Maßkörpervorrichtung nach einem der vorangehenden Ansprüche, **dadurch gekennzeichnet, dass** das mindestens eine Fixierungsband (26) biegeflexibel ist.

11. Maßkörpervorrichtung nach einem der vorangehenden Ansprüche, **dadurch gekennzeichnet, dass** der Maßkörper (28) ein erstes Ende (98) aufweist und ein zweites Ende (100) aufweist, wobei bei relativer Fixierung des ersten Endes (98) und des zweiten Endes (100) des mindestens einen Fixierungsbands (26) der Maßkörper (28) sich über sein erstes Ende (98) und sein zweites Ende (100) ohne Kodierungsmodifikation fortsetzt.

12. Maßkörpervorrichtung nach einem der vorangehenden Ansprüche, **dadurch gekennzeichnet, dass** an dem Brückenelement (60; 90) und/oder dem mindestens einen Fixierungsband (26) mindestens zwei Haken (84; 122) angeordnet sind, und insbesondere, dass die Haken (84) hintereinander bezogen auf eine Verbindungsrichtung (56) des ersten Endes (32) und des zweiten Endes (34) des mindestens einen Fixierungsbands (26) angeordnet sind.

13. Maßkörpervorrichtung nach einem der vorangehenden Ansprüche, **gekennzeichnet durch** eine erste Verbindungseinrichtung (52; 52'), welche einer ersten Reihe (44) an Ausnehmungen (38) zugeordnet ist, und **durch** eine zweite Verbindungseinrichtung (54; 54'), welche einer zweiten Reihe (46) an Ausnehmungen (38) zugeordnet ist.

14. Maßkörpervorrichtung nach einem der vorangehenden Ansprüche, **dadurch gekennzeichnet, dass** das Brückenelement (60; 90) auf einer Oberseite (40) des mindestens einen Fixierungsbands (26) aufliegend mit diesem verbunden ist.

15. Maßkörpervorrichtung nach einem der vorangehenden Ansprüche, **dadurch gekennzeichnet, dass** der Maßkörper (28) magnetisch kodiert ist und als Kodierungsmaterial ein magnetisches Material umfasst, und/oder dass der Maßkörper (28) optisch oder kapazitiv kodiert ist.

16. Positions-/Wegmesssystem, umfassend eine Maßkörpervorrichtung (12) gemäß einem der vorangehenden Ansprüche und eine Sensoreinrichtung (14), welche mindestens einen für die Kodierung sensitiven Sensor (22; 24) aufweist, und insbesondere, **gekennzeichnet durch** einen ersten Sensor (22) und einen zweiten Sensor (24), und insbesondere **dadurch gekennzeichnet, dass** der erste Sensor (22) und der zweite Sensor (24) zueinander gegenüberliegend sind, und insbesondere **dadurch gekennzeichnet, dass** der mindestens eine Sensor (22; 24) magnetfeldsensitiv ist und der kodierte Maßkörper (28) magnetisch kodiert ist.

17. Anwendung, an welcher ein Positions-/Wegmesssystem gemäß Anspruch 16 montiert ist, umfassend ein drehbares oder schwenkbares Element (16), an welchem das mindestens eine Fixierungsband (26) fixiert ist, und insbesondere **dadurch gekennzeichnet, dass** das Fixierungsband (26) das drehbare oder schwenkbare Element (16) umgibt, und insbesondere **dadurch gekennzeichnet, dass** das mindestens eine Fixierungsband (26) über die mindestens eine Verbindungseinrichtung (52, 54; 52', 54') an dem drehbaren oder schwenkbaren Element (16) verspannt gehalten ist.

## Claims

1. Measuring body device for a position/path measurement system, comprising at least one fixing band (26) to fix the measuring body device to an application (16), wherein the at least one fixing band (26) has a first end (34) and a second end (36), a measuring body (28) in the form of a band with at least one coding layer (30) made of coding material, which is associated with the least one fixing band (26), and at least one connecting mechanism (52, 54; 52', 54'; 124, 126), which fixes the first end (34) and the second end (36) of the fixing band (26) relative to one another, wherein the at least one connecting mechanism (52, 54; 52', 54'; 124, 126) comprises a bridge element (60; 90), which is fixed or is fixable relative to the first end (34) and relative to the second end (36) of the at least one fixing band (26), and wherein at least one path storage device (66) is arranged on the bridge element (60; 90) with a first transverse element (68), a second transverse element (70), which is spaced apart from the first transverse element (68), and a web element (76), which connects the first transverse element (68) and the second transverse element (70) and is integrally connected to the first transverse element (68) and the second transverse element (70), a spacing between the first transverse element (68) and the second transverse element (70) being determinably adjustable, **characterised in that** the spacing between the first transverse element (68) and the second transverse element (70) is determinably adjustable by plastic deformation of the web element (76) and/or of the first transverse element (68) and/or the second transverse element (70).

2. Measuring body device according to claim 1, **characterised in that** the bridge element (60; 90) comprises a first region (62; 92), which is fixed or fixable relative to the first end (34) of the at least one fixing band (26) and on which the first transverse element (68) is integrally seated and in particular **in that** the first transverse element (68) is oriented transverse to the first region (62; 92).

3. Measuring body device according to any one of the preceding claims, **characterised in that** the bridge element (60; 90) comprises a second region (64; 94; 128), which is fixed or fixable relative to the second end (34) of the at least one fixing band (26) and on which the second transverse element (70) is integrally seated and in particular **in that** the second transverse element (70) is oriented transverse to the second region (64; 94; 128).

4. Measuring body device according to any one of the preceding claims, **characterised in that** the web element (76) is oriented transverse to the first transverse element (68) and transverse to the second transverse element (70) and/or **in that** the web element (76) has at least one recess (78).

5. Measuring body device according to any one of the preceding claims, **characterised in that** the first transverse element (68) and the second transverse element (70) have engagement faces (80a; 80b) for a tool (82) to shorten the spacing between the first transverse element (68) and the second transverse element (70).

6. Measuring body device according to any one of the preceding claims, **characterised in that** one or more recesses (38) or one or more hooks (122) are arranged on the at least one fixing band (26) in the region of the first end (34) and/or of the second end (36) and in particular **in that** there are arranged on the bridge element (60; 90) one or more hooks (84) to engage in one or more recesses (38), which are positioned on the at least one fixing band (26), and/or one or more recesses (130) for the engagement of one or more hooks (122), which are positioned on the at least one fixing band (26) and in particular **in that** the bridge element (90) is fixedly connected to the at least one fixing band (26) relative to one end (32) and the hook(s) (84) are provided for fixing relative to the other end (34).

7. Measuring body device according to any one of claims 1 to 5, **characterised in that** one or more recesses (38) or one or more hooks (122) are arranged on the at least one fixing band (26) in the region of the first end (34) and/or of the second end (36) and in particular **in that** there are arranged on the bridge element (60; 90) one or more hooks (84) to engage in one or more recesses (38), which are positioned on the at least one fixing band (26), and/or one or more recesses (130) for the engagement of one or more hooks (122), which are positioned on the at least one fixing band (26) and in particular **in that** at least one hook (84) and/or at least one recess (130) respectively is provided on the bridge element (60) toward the two ends (32, 34) of the at least one fixing band (26).

8. Measuring body device according to claim 6 or 7, **characterised in that** the at least one recess (130) and/or the at least one hook (84), which is arranged on the at least one fixing band (26), is positioned on a web element (112; 114; 118; 120), which is connected to the at least one fixing band (26) and in particular **in that** a hook (84) is formed by a stamped tab element, and in particular **in that**, in the region of a hook connection, an element (112, 114; 118, 120) with the at least one recess (38; 130) abuts an element (64; 128) with the at least one hook (84; 122) and a hook (84; 122) engages from below in an associated recess (38; 130) and in particular **in that** when at least one fixing band (26) is fixed on the application (16), a hook (84) abuts an end face (86) of the associated recess (38), which faces the path storage device (66) and in particular **in that** the at least one recess (38) on the at least one fixing band (26) is continuous, and in particular **in that** a plurality of recesses (38) is provided which are uniformly spaced apart, and in particular **in that** a spacing (D₁) of adjacent recesses (38) in the longitudinal direction (50) of the at least one fixing band (26) is the same as a coding period (D₂) or an integral multiple thereof, and in particular **characterised by** a first row (44) of recesses (38) and a second row (46) of recesses (38), the measuring body (28) being positioned between the first row (44) and the second row (46).

9. Measuring body device according to any one of the preceding claims, **characterised in that** tabs (104a, 104b) for positioning and/or fixing the measuring body (28) are integrally formed on the at least one fixing band (26) and in particular **in that** tabs (104a, 104b) are produced by stamping and in particular **in that** tabs (104a, 104b) are arranged on recesses (38) and are at least partly made of material which is removed at the recess (38).

10. Measuring body device according to any one of the preceding claims, **characterised in that** the at least one fixing band (26) is flexible.

11. Measuring body device according to any one of the preceding claims, **characterised in that** the measuring body (28) has a first end (98) and a second end (100), wherein when the first end (98) and the second end (100) of the at least one fixing band (26) are relatively fixed, the measuring body (28) continues over its first end (98) and its second end (100) without coding modification.

12. Measuring body device according to any one of the preceding claims, **characterised in that** at least two hooks (84; 122) are arranged on the bridge element (60; 90) and/or the at least one fixing band (26), and in particular **in that** the hooks (84) are arranged one behind the other in relation to a connecting direction (56) of the first end (32) and the second end (34) of the at least one fixing band (26).

13. Measuring body device according to any one of the preceding claims, **characterised by** a first connecting mechanism (52; 52'), which is associated with a first row (44) of recesses (38), and by a second connecting mechanism (54; 54'), which is associated with a second row (46) of recesses (38).

14. Measuring body device according to any one of the preceding claims, **characterised in that** the bridge element (60; 90) abutting an upper side (40) of the at least one fixing band (26), is connected thereto.

15. Measuring body device according to any one of the preceding claims, **characterised in that** the measuring body (28) is magnetically coded and, as coding material, comprises a magnetic material, and/or the measuring body (28) is optically or capacitively coded.

16. Position/path measurement system, comprising a measuring body device (12) according to any one of the preceding claims and a sensor device (14), which has at least one sensor (22; 24) sensitive to the coding, and in particular **characterised by** a first sensor (22) and a second sensor (24), and in particular **characterised in that** the first sensor (22) and the second sensor (24) are located opposite to each other, and in particular **characterised in that** the at least one sensor (22; 24) is magnetic field-sensitive and the coded measuring body is magnetically coded.

17. Application, on which a position/path measurement system according to claim 16 is installed, comprising a rotatable or pivotable element (16), to which the at least one fixing band (26) is fixed, and in particular **characterised in that** the fixing band (26) surrounds the rotatable or pivotable element (16), and in particular **characterised in that** the at least one fixing band (26) is held tensioned by means of the at least one connecting mechanism (52, 54; 52', 54') on the rotatable or pivotable element (16).

## Revendications

1. Dispositif de corps de masse pour un système de mesure de position/déplacement, comprenant au moins une bande de fixation (26) pour la fixation du dispositif de corps de masse au niveau d'une application (16), dans lequel l'au moins une bande de fixation (26) présente une première extrémité (34) et une seconde extrémité (36), un corps de masse en forme de bande (28) avec au moins une couche de codage (30) en matériau de codage qui est associée à l'au moins une bande de fixation (26), et au moins un dispositif de liaison (52, 54 ; 52', 54' ; 124, 126) qui fixe la première extrémité (34) et la seconde extrémité (36) de la bande de fixation (26) l'une par rapport à l'autre, dans lequel l'au moins un dispositif de liaison (52, 54 ; 52', 54' ; 124, 126) comprend un élément de pont (60 ; 90) qui est ou peut être fixé par rapport à la première extrémité (34) et par rapport à la seconde extrémité (36) de l'au moins une bande de fixation (26), et dans lequel au niveau de l'élément de pont (60 ; 90), au moins un dispositif d'enregistrement de déplacement (66) est agencé avec un premier élément transversal (68), un second élément transversal (70) espacé du premier élément transversal (68) et un élément de nervure (76) qui relie le premier élément transversal (68) et le second élément transversal (70) et est relié d'un seul tenant au premier élément transversal (68) et au second élément transversal (70), dans lequel une distance entre le premier élément transversal (68) et le second élément transversal (70) peut être réglée de manière contrôlable, **caractérisé en ce que** la distance entre le premier élément transversal (68) et le second élément transversal (70) est réglable de manière contrôlable par déformation plastique de l'élément de nervure (76) et/ou du premier élément transversal (68) et/ou du second élément transversal (70).

2. Dispositif de corps de masse selon la revendication 1, **caractérisé en ce que** l'élément de pont (60 ; 90) comprend une première zone (62 ; 92) qui est ou peut être fixée par rapport à la première extrémité (34) de l'au moins une bande de fixation (26) et au niveau de laquelle le premier élément transversal (68) loge d'un seul tenant, et en particulier **en ce que** le premier élément transversal (68) est orienté transversalement à la première zone (62 ; 92).

3. Dispositif de corps de masse selon l'une quelconque des revendications précédentes, **caractérisé en ce que** l'élément de pont (60 ; 90) comprend une seconde zone (64 ; 94 ; 128) qui est ou peut être fixée par rapport à la seconde extrémité (34) de l'au moins une bande de fixation (26) et au niveau de laquelle le second élément transversal (70) loge d'un seul tenant, et en particulier **en ce que** le second élément transversal (70) est orienté transversalement à la seconde zone (64 ; 94 ; 128).

4. Dispositif de corps de masse selon l'une quelconque des revendications précédentes, **caractérisé en ce que** l'élément de nervure (76) est orienté transversalement au premier élément transversal (68) et transversalement au second élément transversal (70) et/ou **en ce que** l'élément de nervure (76) présente au moins un évidement (78).

5. Dispositif de corps de masse selon l'une quelconque des revendications précédentes, **caractérisé en ce que** le premier élément transversal (68) et le second élément transversal (70) ont des surfaces d'attaque (80a ; 80b) pour un outil (82) pour le raccourcissement de la distance entre le premier élément transversal (68) et le second élément transversal (70).

6. Dispositif de corps de masse selon l'une quelconque des revendications précédentes, **caractérisé en ce qu'**au niveau de l'au moins une bande de fixation (26) dans la zone de la première extrémité (34) et/ou de la seconde extrémité (36), un ou plusieurs évidements (38) ou un ou plusieurs crochets (122) sont agencés, et en particulier **en ce qu'**au niveau de l'élément de pont (60 ; 90), un ou plusieurs crochets (84) pour la mise en prise avec un ou plusieurs évidements (38) qui sont positionnés au niveau de l'au moins une bande de fixation (26), sont agencés et/ou un ou plusieurs évidements (130) sont agencés pour la mise en prise d'un ou plusieurs crochets (122) qui sont positionnés au niveau de l'au moins une bande de fixation (26), et en particulier **en ce que** l'élément de pont (90) est relié fixement à l'au moins une bande de fixation (26) par rapport à une extrémité (32) et le ou les crochets (84) sont prévus pour la fixation par rapport à l'autre extrémité (34).

7. Dispositif de corps de masse selon les revendications 1 à 5, **caractérisé en ce qu'**au niveau de l'au moins une bande de fixation (26) dans la zone de la première extrémité (34) et/ou de la seconde extrémité (36), un ou plusieurs évidements (38) ou un ou plusieurs crochets (122) sont agencés, et en particulier **en ce qu'**au niveau de l'élément de pont (60 ; 90), un ou plusieurs crochets (84) sont agencés pour la mise en prise avec un ou plusieurs évidements (38) qui sont positionnés au niveau de l'au moins une bande de fixation (26) et/ou un ou plusieurs évidements (130) sont agencés pour la mise en prise d'un ou plusieurs crochets (122) qui sont positionnés au niveau de l'au moins une bande de fixation (26) et en particulier **en ce qu'**au niveau de l'élément de pont (60) vers les deux extrémités (32, 34) de l'au moins une bande de fixation (26), respectivement au moins un crochet (84) et/ou au moins un évidement (130) est prévu.

8. Dispositif de corps de masse selon la revendication 6 ou 7, **caractérisé en ce que** l'au moins un évidement (130) et/ou l'au moins un crochet (84) qui est agencé au niveau de l'au moins une bande de fixation (26), est positionné au niveau d'un élément de nervure (112 ; 114 ; 118 ; 120) qui est relié à l'au moins une bande de fixation (26), et en particulier **en ce qu'**un crochet (84) est formé par une languette estampée, et en particulier **en ce que** dans la zone d'une liaison par crochet, un élément (112, 114 ; 118, 120) avec l'au moins un évidement (38 ; 130) se trouve sur un élément (64 ; 128) avec l'au moins un crochet (84 ; 122) et un crochet (84 ; 122) vient en prise par le bas avec un évidement (38 ; 130) associé, et en particulier **en ce que** lorsqu'au moins une bande de fixation (26) est fixée au niveau de l'application (16), un crochet (84) repose contre un côté avant (86) de l'évidement (38) associé qui est tourné vers le dispositif d'enregistrement de déplacement (66), et en particulier **en ce que** l'au moins un évidement (38) est traversant au niveau de l'au moins une bande de fixation (26), et en particulier **en ce qu'**une pluralité d'évidements (38) sont prévus, lesquels sont espacés régulièrement, et en particulier **en ce qu'**une distance (D₁) d'évidements (38) contigus est identique dans le sens longitudinal (50) de l'au moins une bande de fixation (26) à une période de codage (D₂) ou un multiple entier de ceux-ci, et en particulier **caractérisé par** une première série (44) d'évidements (38) et une seconde série (46) d'évidements (38), dans lequel le corps de masse (28) est positionné entre la première série (44) et la seconde série (46).

9. Dispositif de corps de masse selon l'une quelconque des revendications précédentes, **caractérisé en ce qu'**au niveau de l'au moins une bande de fixation (26), des languettes (104a, 104b) sont formées d'un seul tenant pour le positionnement et/ou la fixation du corps de masse (28), et en particulier **en ce que** des languettes (104a, 104b) sont fabriquées par estampage, et en particulier **en ce que** des languettes (104a, 104b) sont agencées au niveau d'évidements (38) et sont au moins en partie en matériau qui est retiré au niveau de l'évidement (38).

10. Dispositif de corps de masse selon l'une quelconque des revendications précédentes, **caractérisé en ce que** l'au moins une bande de fixation (26) est flexible et souple.

11. Dispositif de corps de masse selon l'une quelconque des revendications précédentes, **caractérisé en ce que** le corps de masse (28) présente une première extrémité (98) et une seconde extrémité (100), dans lequel en cas de fixation relative de la première extrémité (98) et de la seconde extrémité (100) de l'au moins une bande de fixation (26), le corps de masse (28) se poursuit sur sa première extrémité (98) et sa seconde extrémité (100) sans modification de codage.

12. Dispositif de corps de masse selon l'une quelconque des revendications précédentes, **caractérisé en ce qu'**au niveau de l'élément de pont (60 ; 90) et/ou l'au moins une bande de fixation (26), au moins deux crochets (84 ; 122) sont agencés, et en particulier **en ce que** les crochets (84) sont agencés l'un derrière l'autre par rapport à un sens de liaison (56) de la première extrémité (32) et de la seconde extrémité (34) de l'au moins une bande de fixation (26).

13. Dispositif de corps de masse selon l'une quelconque des revendications précédentes, **caractérisé par** un premier dispositif de liaison (52 ; 52') qui est associé à une première série (44) d'évidements (38) et par un second dispositif de liaison (54 ; 54') qui est associé à une seconde série (46) d'évidements (38).

14. Dispositif de corps de masse selon l'une quelconque des revendications précédentes, **caractérisé en ce que** l'élément de pont (60 ; 90) est relié reposant sur un côté supérieur (40) de l'au moins une bande de fixation (26) à celle-ci.

15. Dispositif de corps de masse selon l'une quelconque des revendications précédentes, **caractérisé en ce que** le corps de masse (28) est codé magnétiquement et comprend comme matériau de codage un matériau magnétique, et/ou **en ce que** le corps de masse (28) est codé de manière optique ou capacitive.

16. Système de mesure de position/déplacement, comprenant un dispositif de corps de masse (12) selon l'une quelconque des revendications précédentes, et un dispositif capteur (14) qui présente au moins un capteur (22 ; 24) sensible au codage, et en particulier **caractérisé par** un premier capteur (22) et un second capteur (24), et en particulier **caractérisé en ce que** le premier capteur (22) et le second capteur (24) sont en regard, et en particulier **caractérisé en ce que** l'au moins un capteur (22 ; 24) est sensible au champ magnétique et le corps de masse (28) codé est codé par voie magnétique.

17. Application, au niveau de laquelle est monté un système de mesure de position/déplacement d'après la revendication 16, comprenant un élément (16) rotatif ou pivotant, au niveau duquel l'au moins une bande de fixation (26) est fixée, et en particulier **caractérisée en ce que** la bande de fixation (26) entoure l'élément (16) rotatif ou pivotant, et en particulier **caractérisée en ce que** l'au moins une bande de fixation (26) est maintenue tendue par le biais de l'au moins un dispositif de liaison (52, 54 ; 52', 54') au niveau de l'élément (16) rotatif ou pivotant.
